# EUROPÄISCHE PATENTSCHRIFT

(11) **EP 3 507 154 B1**
(45) Veröffentlichungstag und Bekanntmachung des Hinweises auf die Patenterteilung: **27.05.2020**
(21) Anmeldenummer: 17751012.0
(22) Anmeldetag: 17.07.2017
(51) Int. Cl.: B60T 13/68

(54) **ELEKTRONISCH STEUERBARES PNEUMATISCHES BREMSSYSTEM IN EINEM NUTZFAHRZEUG SOWIE VERFAHREN ZU DESSEN STEUERUNG**
ELECTRONIC CONTROLLABLE PNEUATIC BRAKE SYSTEM AND METHOD FOR CONTROLLING
SYSTEME DE FREIN PNEUMATIQUE A REGLAGE ELECTRIQUE ET METHODE DE REGLAGE

(30) Priorität: 31.08.2016 DE 102016010464
(43) Veröffentlichungstag der Anmeldung: 10.07.2019
(73) Patentinhaber: WABCO Europe BVBA, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000860
(87) Internationale Veröffentlichungsnummer: WO 2018/041385

(56) Entgegenhaltungen:
- EP-A2- 1 099 611
- DE-A1- 10 236 922
- DE-A1-102005 060 225
- DE-A1-102013 015 949

## Beschreibung

Elektronisch steuerbares pneumatisches Bremssystem in einem Nutzfahrzeug sowie Verfahren zum elektronischen Steuern eines pneumatischen Bremssystems in einem Nutzfahrzeug

Die Erfindung betrifft ein elektronisch steuerbares pneumatisches Bremssystem in einem Nutzfahrzeug sowie ein Verfahren zum elektronischen Steuern eines pneumatischen Bremssystems.

In Fahrzeugen, insbesondere Nutzfahrzeugen, mit einem pneumatischen Bremssystem können zum Aussteuern von Bremsdrücken von einer Steuereinrichtung (ECU) elektronisch den Fahrzeugachsen zugeordnete Achsmodulatoren angesteuert werden. Die elektronische Ansteuerung findet dabei entweder in Abhängigkeit eines durch ein Fußbremsventil vorgegebenen Fahrerwunsches oder aber in Abhängigkeit einer automatisiert vorgegebenen Fahrzeug-Soll-Verzögerung statt. Die Achsmodulatoren erzeugen dann pneumatisch einen entsprechenden Betriebsbrems-Bremsdruck, der an Bremszylinder der Betriebsbremsen des Bremssystems ausgesteuert wird.

Alternativ können die Achsmodulatoren auch pneumatisch angesteuert werden, indem vom Fußbremsventil ein dem Fahrerwunsch entsprechender Betriebsbrems-Steuerdruck an die Achsmodulatoren vorgegeben wird, in Abhängigkeit dessen der jeweilige Achsmodulator den entsprechenden Betriebsbrems-Bremsdruck für die Betriebsbremsen durch eine Luftmengenverstärkung erzeugt. In beiden Varianten ist eine ABS-Funktionalität integriert, so dass ein Blockieren der Räder beim Bremsen verhindert werden kann.

Um in derartigen Bremssystemen auch eine automatisiert ansteuerbare Rückfallebene bzw. Redundanz auszubilden, die in einer Notsituation automatisiert eingreifen kann, wenn der Fahrer beispielsweise unaufmerksam oder nicht am Platz ist, sind mehrere Lösungen bekannt. Derartige Lösungen erfordern meist eine Vielzahl an zusätzlichen pneumatischen Komponenten, da bei diesen Lösungen auch eine abgestufte Vorgabe einer Bremsung vorgesehen ist. Auch weitere aufwändige Lösungen, die eine elektrisch redundante Ansteuerung ermöglichen, sind bekannt, beispielsweise über eine elektropneumatische Ansteuerung einer Parkbremse. Nachteilig bei all diesen Lösungen ist, dass die zusätzlichen pneumatischen Komponenten den Montage- und Kostenaufwand erhöhen und zudem nur sehr umständlich nachzurüsten sind.

Die DE 10 2013 015 949 A1 beschreibt dazu ein Bremssystem zur Kurvenunterstützung, wobei vorgesehen ist, mit einem elektronisch gesteuerten Mehrwegeventil einen Betriebsbrems-Bremsdruck an Betriebsbremsen des Bremssystems auszusteuern, wobei ein Betriebsbrems-Bremsdruck auch dann ausgesteuert wird, wenn von einem Fußbremsventil als Bremswertgeber keine Bremsanforderung vorliegt. Das Mehrwegeventil und das Fußbremsventil sind über ein Wechselventil (Select-High-Ventil) auf ein Relaisventil geschaltet, das den Betriebsbrems-Bremsdruck an die Betriebsbremsen aussteuert. Das Wechselventil gibt hierbei lediglich den höheren der beiden Drücke vom Fußbremsventil oder dem Mehrwegeventil an das Relaisventil weiter, so dass die elektronische Bremsanforderung des Mehrwegeventils durch das Fußbremsventil übersteuert werden kann.

Die DE 10 2010 050 578 A1 oder die DE 10 2010 050 580 A1 zeigen eine Bremsanlage, bei der über ein Fußbremsventil bzw. eine Bremspedaleinrichtung eine Bremsanforderung vorgegeben wird. Diese wird in einer Steuereinrichtung in ein elektronisches Signal umgewandelt und mit dem elektronischen Signal ein Achsmodulator angesteuert, das den Betriebsbrems-Bremsdruck an die Betriebsbremsen aussteuert. Fällt die Elektronik aus, wird im Redundanzfall der Achsmodulator pneumatisch über Druckluftleitungen mit einem Betriebsbrems-Steuerdruck angesteuert und darüber ein Betriebsbrems-Bremsdruck an die Betriebsbremsen ausgegeben. Der Achsmodulator weist dazu drei Magnetventile sowie ein Relaisventil auf. Je nach Stellung der Magnetventile wird als Betriebsbrems-Steuerdruck der vom Fußbremsventil vorgegebene Betätigungsdruck, der Vorratsdruck aus dem Druckmittelvorrat oder der Atmosphärendruck aus einer Entlüftung verwendet. Dadurch kann der Betriebsbrems-Bremsdruck je nach elektronisch vorgegebener Schaltstellung der drei Magnetventile in Abhängigkeit einer manuellen oder elektrischen Vorgabe erhöht, gehalten oder reduziert werden.

Die WO 2016/045652 A1 zeigt eine elektropneumatische Betriebsbremseinrichtung mit einem Fußbremsventil, dessen Bremspedalstellung sensiert werden kann und dessen ausgegebener Betätigungsdruck zum Ansteuern der Achsmodulatoren unabhängig von einer Bremspedalstellung modifiziert werden kann. Dazu ist eine Magnetventileinrichtung mit beispielsweise zwei 3/2-Wegeventilen vorgesehen, die je nach elektronischer Anforderung einen Fußbrems-Eingangsdruck in das Fußbremsventil einleitet. Über ein zusätzliches Halteventil wird der wirkende Fußbrems-Eingangsdruck gehalten. Durch den wirkenden Fußbrems-Eingangsdruck wird im Fußbremsventil pneumatisch ein Steuerkolben mechanisch bewegt, so dass vom Fußbremsventil ein der pneumatischen Betätigung entsprechender Betätigungsdruck ausgesteuert wird, der als Bremsventil-Steuerdruck an die Achsmodulatoren weitergeleitet wird. Dadurch kann im Redundanzfall, d.h. wenn die elektrische Ansteuerung der Betriebsbremsen fehlschlägt, und wenn keine manuelle Betätigung durch den Fahrer vorliegt über das Fußbremsventil und dessen pneumatischen Kanal eine Bremsung bewirkt werden. Somit liegt quasi eine elektronisch gesteuerte, mechano-pneumatische Betätigung des Fußbremsventils vor.

Eine weitere mechanische Betätigung des Fußbremsventils ist beispielsweise in US 7 520 572 B2 und EP 1 730 006 B1 gezeigt. Hierbei ist jeweils ein Verfahren gezeigt, bei dem das Fußbremsventil zusätzlich zum Bremspedal von einer elektronischen Steuereinrichtung betätigt werden kann. Demnach ist ein elektronisches Bremssystem vorgesehen, dessen Betriebsbremsen durch das Fußbremsventil und über ein zusätzliches Relaisventil angesteuert werden. Die Bremsanforderung kann zum einen über das Bremspedal auf das Fußbremsventil vorgegeben werden oder aber unabhängig davon über einen Bremsventilaktuator, der zwischen dem Bremspedal und dem Fußbremsventil angeordnet ist. Der Bremsventilaktuator wird durch die elektronische Steuereinrichtung gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Fußbremsventil betätigt wird.

In DE 10 2013 015 971 A1 ist eine Bremsvorrichtung beschrieben, bei der das Fußbremsventil über ein Wegeventil mit den Betriebsbremsen pneumatisch verbunden ist. In einer ersten Schaltstellung des Wegeventils wird der vom Fußbremsventil durch manuelle Betätigung erzeugte Betätigungsdruck direkt an die Betriebsbremsen ausgegeben. In einer zweiten Schaltstellung wird zwischen das Fußbremsventil und die Betriebsbremsen ein Rückschlagventil geschaltet. Das Rückschlagventil ermöglicht ein vom Fußbremsventil bewirktes Druckerhöhen an den Betriebsbremsen, verhindert allerdings ein Druckreduzieren bzw. Entlüften der Betriebsbremsen und sorgt somit für ein Halten des aufgebauten Betriebsbrems-Bremsdruckes.

In EP 2 532 559 B1 ist ein Bremssystem beschrieben, das zwei 2/2-Wegeventile sowie zumindest ein Select-High-Ventil aufweist. Die 2/2-Wegeventile können in Abhängigkeit eines gemessenen Betriebsbrems-Steuerdruckes elektronisch derartig umgeschaltet werden, dass ein vom Druckmittelvorrat einströmendes Druckmittel mit einem Vorratsdruck oder eine Entlüftung mit dem Select-High-Ventil kurzgeschlossen werden. Dadurch kann ein elektrisch gesteuertes Druckerhöhen oder Druckreduzieren des Betriebsbrems-Bremsdruckes erreicht werden. Durch eine entsprechende Schaltstellung der 2/2-Wegeventile kann der Betriebsbrems-Steuerdruck auch gehalten werden. Ergänzend wird auch der vom Fahrer durch Betätigung des Fußbremsventils vorgegebene Betätigungsdruck an das Select-High-Ventil geleitet. Das Select-High-Ventil steuert dann den höheren der beiden anliegenden Drücke an die Betriebsbremsen aus, d.h. entweder den von dem entsprechenden Bypass-Ventil bereitgestellten Vorrats- bzw. Fußbrems-Eingangsdruck oder den Betätigungsdruck. Somit kann mit zwei 2/2-Wegeventilen und einem Select-High-Ventil elektronisch gesteuert ein Druckerhöhen, ein Druckhalten oder ein Druckreduzieren erreicht werden, wenn keine manuelle Fahrerbetätigung vorliegt.

EP 2 055 541 B1 beschreibt ein Fahrerassistenzsystem mit einem bistabilen und einem monostabilen 3/2-Wegeventil. Über das bistabile 3/2-Wegeventil kann ein Federspeicher einer Feststellbremse belüftet oder entlüftet werden, indem bei entsprechender Schaltstellung des bistabilen 3/2-Wegeventils entweder der Druckmittelvorrat zum Lösen des Federspeichers oder eine Entlüftung zum Zuspannen des Federspeichers mit einem pneumatischen Steuereingang eines Achsmodulators verbunden werden. Zwischen dem bistabilen 3/2-Wegeventil und dem Achsmodulator ist das monostabile 3/2-Wegeventil angeordnet, das in einer Schaltstellung den vom bistabilen 3/2-Wegeventil ausgegebenen Parkbrems-Steuerdruck an den Achsmodulator durchlässt und sonst eine Strömungsverbindung verhindert. D.h. in der zweiten Schaltstellung des monostabilen 3/2-Wegeventils wird der vorherrschende Parkbrems-Steuerdruck am Achsmodulator gehalten. De 10 2005 060225 A1 stellt ein weiteres Dokument des Standes der Technik dar.

Es ist Aufgabe der Erfindung, ein elektronisch steuerbares pneumatisches Bremssystem in einem Nutzfahrzeug bereitzustellen, mit dem mit wenig Aufwand eine sichere und zuverlässige elektronisch gesteuerte redundante Bremsung, insbesondere in einem automatisiert gesteuerten Fahrzeug, gewährleistet werden kann. Weiterhin ist Aufgabe der Erfindung, ein Verfahren zum elektronischen Steuern eines derartigen Bremssystems in einem Nutzfahrzeug anzugeben.

Diese Aufgabe wird durch ein elektronisch steuerbares pneumatisches Bremssystem nach Anspruch 1 und ein Verfahren nach Anspruch 15 gelöst. Bevorzugte Weiterbildungen sind in den Unteransprüchen angegeben.

Erfindungsgemäß ist dazu vorgesehen, dass ein von einem Fußbremsventil vorgegebener Betriebsbrems-Steuerdruck zum Ansteuern mindestens eines Achsmodulators eines elektronisch steuerbaren, pneumatischen Bremssystem in Abhängigkeit eines in einen Entlüftungsraum des Fußbremsventils eingeleiteten Druckmittels, das einen Fußbrems-Eingangsdruck aufweist, erzeugt werden kann. Vorzugsweise wird der Betriebsbrems-Steuerdruck dabei - insbesondere in einem Redundanzfall - nicht in Abhängigkeit einer manuell oder automatisch bewirkten Bewegung eines Steuerkolbens des Fußbremsventils vorgegeben.

Vielmehr wird insbesondere im Redundanzfall Druckmittel mit einem vorgegebenen Fußbrems-Eingangsdruck vorzugsweise in einen Fußbrems-Entlüftungsanschluss des Fußbremsventils eingelassen, so dass dieses bei unbetätigtem Fußbremsventil und somit bei unbetätigtem Steuerkolben über den Entlüftungsraum sowie einen Arbeitsraum in einen oder mehrere Steueranschlüsse des Fußbremsventils strömen kann. Die Steueranschlüsse sind jeweils mit einem pneumatischen Steuereingang für eine pneumatische Rückfallebene des mindestens einen einem Bremskreis zugeordneten Achsmodulators verbunden, so dass am pneumatischen Steuereingang des Achsmodulators im Wesentlichen der Fußbrems-Eingangsdruck als Betriebsbrems-Steuerdruck anliegt. Hierbei können beispielsweise Druckverluste durch das Durchströmen des Fußbremsventils auftreten. Der Betriebsbrems-Steuerdruck wird vom jeweiligen Achsmodulator luftmengenverstärkt und als Betriebsbrems-Bremsdruck zum Druckbeaufschlagen von Radbremsen bzw. Betriebsbremsen des Fahrzeuges ausgegeben, so dass das Fahrzeug über die jeweils angesteuerten Betriebsbremsen abgebremst werden kann.

Alternativ kann auch vorgesehen sein, dass der Achsmodulator in den entsprechenden Bremskreisen entfällt und der vom Fußbremsventil ausgesteuerte Betriebsbrems-Steuerdruck direkt als Betriebsbrems-Bremsdruck an die Betriebsbremsen des Fahrzeuges aussteuert wird. Dies kann beispielsweise dann erfolgen, wenn der Fußbrems-Eingangsdruck bzw. der Betriebsbrems-Steuerdruck bereits derartig ausgelegt sind, dass durch den Achsmodulator keine Luftmengenverstärkung mehr nötig ist, um die Betriebsbremsen entsprechend zu betätigen.

Somit wird durch das in den Entlüftungsraum eingelassene Druckmittel mit dem Fußbrems-Eingangsdruck vorteilhafterweise keine mechanische Betätigung des Fußbremsventils bewirkt. Unter mechanische Betätigung des Fußbremsventils wird hierbei eine beliebige - manuell oder automatisch angeforderte, beispielsweise elektrisch, mechanisch oder pneumatisch verursachte - Bewegung des Steuerkolbens des Fußbremsventils verstanden. Der Steuerkolben ist hierbei derjenige Kolben im Fußbremsventil, der bei einer Betätigung einer Betätigungseinrichtung, beispielsweise des Bremspedals, diese mechanische Betätigung umsetzt in ein betätigungsabhängiges Durchströmen von Druckmittel vom Druckmittelvorrat durch den Arbeitsraum zu den Steueranschlüssen des Fußbremsventils. Er sorgt somit für eine abgestufte Freigabe von Druckmittel aus einem beliebigen Druckmittelvorrat des Bremssystems an die Achsmodulatoren oder die Radbremsen, wobei dazu beispielsweise auf weitere Kolben, beispielsweise Relaiskolben und Abstufungskolben, in dem Arbeitsraum eingewirkt wird. Der Steuerkolben selbst ist dazu nicht in dem Arbeitsraum selbst angeordnet sondern begrenzt diese allenfalls. Ein in dem Arbeitsraum einströmendes Druckmittel wirkt somit auf den Steuerkolben allenfalls entlastend...

Erfindungsgemäß wird somit eine bereits im Fußbremsventil vorhandene Schnittstelle - der Entlüftungsraum bzw. der Fußbrems-Entlüftungsanschluss - dazu verwendet, in einfacher Weise einen bereits vorab festgelegten Fußbrems-Eingangsdruck direkt als Betriebsbrems-Steuerdruck an die Achsmodulatoren durchzuleiten, ohne dabei in Abhängigkeit des Fußbrems-Eingangsdrucks - beispielsweise über einen zusätzlichen hermetischen Steuerraum - auf den Steuerkolben einzuwirken, um diesen mechanisch zu betätigen bzw. zu bewegen und dadurch ein Strömungsverhalten des in dem Arbeitsraum befindlichen Druckmittels zu beeinflussen.

Dadurch sind zum Ausbilden einer Redundanz vorteilhafterweise keine Veränderungen an den bestehenden pneumatischen Leitungen oder an dem Fußbremsventil selbst nötig, die zu einer Beeinflussung des normalen Betriebes führen können oder einen unnötig hohen Aufwand erfordern, beispielsweise, um einen hermetischen Steuerraum bereitzustellen. Somit können der Montageaufwand und die Zuverlässigkeit erhöht werden. Zudem ist eine einfache Nachrüstbarkeit gegeben, da am bestehenden pneumatischen Bremssystem bis auf die Entlüftung keine Veränderungen durchzuführen sind.

Die Vorgabe des Fußbrems-Eingangsdruckes, der den Betriebsbrems-Steuerdruck vorgibt, erfolgt im Redundanzfall erfindungsgemäß über eine erste Bypass-Ventilanordnung, die gemäß einer Ausführungsform als elektrisch steuerbares 3/2-Wegeventil ausgeführt ist. In einer ersten Schaltstellung des 3/2-Wegeventils wird ein niedriges Druckniveau vorgegeben, indem der Entlüftungsraum des Fußbremsventils beispielsweise mit einer Bypass-Entlüftung verbunden wird, und in einer zweiten Schaltstellung wird ein hohes Druckniveau vorgegeben, indem beispielsweise ein Bypass-Druckmittelvorrat mit dem Entlüftungsraum verbunden wird. Somit kann der Entlüftungsraum in der ersten Schaltstellung entlüftet werden, so dass in diesem in etwa Atmosphärendruck vorherrscht und in der zweiten Schaltstellung kann im Entlüftungsraum der im Bypass-Druckmittelvorrat vorherrschender Bypass-Vorratsdruck, beispielsweise 8bar, eingestellt werden, indem das Druckmittel aus dem Bypass-Druckmittelvorrat über das 3/2-Wegeventil und den Fußbrems-Entlüftungsanschluss in den Entlüftungsraum des Fußbremsventils eingelassen wird. Der Bypass-Druckmittelvorrat kann hierbei beispielsweise der Druckmittelvorrat für einen Parkbrems-Bremskreis des Nutzfahrzeuges oder aber auch ein zusätzlicher, separater Druckmittelvorrat im Nutzfahrzeug sein.

Gemäß einer weiteren Ausführungsform weist eine alternative zweite Bypass-Ventilanordnung zwei elektrisch steuerbare 2/2-Wegeventile auf, die jeweils geöffnet und geschlossen werden können. Ein erstes 2/2-Wegeventil ist mit der Bypass-Entlüftung zum Vorgeben des niedrigen Druckniveaus verbunden und ein zweites 2/2-Wegeventil mit dem Bypass-Druckmittelvorrat zum Vorgeben eines hohen Druckniveaus, wobei beide 2/2-Wegeventile in den Entlüftungsraum bzw. den Fußbrems-Entlüftungsanschluss münden. Ist das erste 2/2-Wegeventil geöffnet und das zweite 2/2-Wegeventil geschlossen (erste Schaltstellung für beide 2/2-Wegeventile), wird die Bypass-Entlüftung mit dem Entlüftungsraum des Fußbremsventils strömungsverbunden. Ist hingegen das erste 2/2-Wegeventil geschlossen und das zweite 2/2-Wegeventil geöffnet (zweite Schaltstellung für beide 2/2-Wegeventile), ist der Bypass-Druckmittelvorrat mit dem Entlüftungsraum des Fußbremsventils strömungsverbunden. Somit kann auch in dieser Ausführungsform ein dem Atmosphärendruck entsprechender oder ein dem Bypass-Vorratsdruck entsprechender Fußbrems-Eingangsdruck vorgegeben werden, der über den Entlüftungsraum und den Arbeitsraum einen entsprechenden Betriebsbrems-Steuerdruck einstellt.

Ergänzend kann der Fußbrems-Eingangsdruck in dieser zweiten Bypass-Ventilanordnung auch geregelt werden, indem von einem Drucksensor der ausgehende Fußbrems-Eingangsdruck beispielsweise am Fußbrems-Entlüftungsanschluss gemessen wird und entsprechend das erste oder zweite 2/2-Wegeventil geöffnet oder geschlossen wird, um den Fußbrems-Eingangsdruck nach oben oder unten anzupassen. Durch ein Schließen beider 2/2-Wegeventile kann der Fußbrems-Eingangsdruck in dieser Ausführung ergänzend auch gehalten werden.

Elektronisch angesteuert werden die erste und die zweite Bypass-Ventilanordnung jeweils über ein Bypass-Signal von einer Bypass-Steuereinrichtung (Bypass-ECU) im Redundanzfall, d.h. bei einem Ausfall der elektrischen Ansteuerung der Achsmodulatoren über eine Betriebsbrems-Steuereinrichtung (ECU) des Bremssystems, und wenn festgestellt wird, dass eine Bremsung nötig ist und der Fahrer diese selbst nicht veranlasst. Im Redundanzfall kann damit über die zweite Schaltstellung der jeweiligen Bypass-Ventilanordnung ein elektropneumatisch gesteuertes Erhöhen des Betriebsbrems-Steuerdruckes auf den Fußbrems-Eingangsdruck erfolgen, so dass von dem jeweiligen Achsmodulatoren ein entsprechend hoher, die Betriebsbremsen vorzugsweise maximal betätigender Betriebsbrems-Bremsdruck erzeugt wird. In der ersten Schaltstellung der jeweiligen Bypass-Ventilanordnung kann auch ein elektropneumatisch gesteuertes Entlüften und somit eine Reduzierung des Betriebsbrems-Steuerdruckes bzw. des Betriebsbrems-Bremsdruckes erfolgen.

Somit kann durch die entsprechende Schaltstellung der jeweiligen Bypass-Ventilanordnung in einfacher Weise ein elektropneumatisch gesteuertes vollständiges Schließen oder ein vollständiges Öffnen der Betriebsbremsen erreicht werden. Erfindungsgemäß wird demnach erkannt, dass es in einem Fahrzeug, insbesondere in einem automatisiert steuerbaren Nutzfahrzeug, bei einem Ausfall in der elektrischen Ansteuerung der Betriebsbremsen des Fahrzeuges über den jeweiligen Achsmodulator lediglich darauf ankommt, dass das Fahrzeug sicher in einen abgebremsten Zustand, insbesondere in den Stillstand, überführt wird, ohne dabei den normalen Betrieb zu beeinflussen. Dies kann vorteilhafterweise durch lediglich ein zusätzliches 3/2 Wegeventil oder zwei 2/2-Wegeventile sowie eine entsprechende Ansteuerlogik erreicht werden, die im Redundanzfall dafür sorgen, dass eine elektropneumatische Vorgabe mit einem hohen Fußbrems-Eingangsdruck umgesetzt werden kann. Die zusätzliche Bypass-Ventilanordnung beeinflusst hierbei den manuellen Betrieb nicht und sorgt gleichzeitig dafür, dass außerhalb des Redundanzfalles eine sichere Entlüftung möglich ist.

Um eine derartige elektropneumatische Redundanz auszubilden, sind somit vorteilhafterweise keine kostenintensiven Ventile, beispielsweise mehrere Solenoid-Ventile, die für eine abgestufte Bremsung sorgen, oder ein Select-High-Ventil, das entweder den Druck vom Fußbremsventil oder dem Bypass-Druckmittelvorrat durchlässt, nötig. Erfindungsgemäß wird somit erkannt, dass die Wahrscheinlichkeit eines Totalausfalles der elektrischen, automatisierten Ansteuerung der Betriebsbremsen in einem Fahrzeug während der Lebensdauer sehr gering ist und daher eine insbesondere im Hinblick auf eine Geräuschentwicklung beim Umschalten des entsprechenden Ventils, den Druckmittelverbrauch und die Abnutzung der Radbremsen optimierte Lösung nicht zwingend erforderlich ist. All diese Aspekte haben keine Auswirkungen auf eine sichere redundante Abbremsung des Fahrzeuges, so dass diese für diesen speziellen Ausnahmefall nicht zu berücksichtigen sind bzw. deren negative Auswirkungen in Kauf genommen werden können, um Kosten zu sparen.

Das Fußbremsventil kann im Redundanzfall einen Betriebsbrems-Steuerdruck ausgeben, der abhängig ist von einer rein mechanischen - manuell vom Fahrer oder automatisch gesteuerten - Vorgabe durch Betätigung des Fußbremsventils oder abhängig von der elektropneumatischen Vorgabe durch den von der Bypass-Ventilanordnung vorgegebenen Fußbrems-Eingangsdruck, bei der das Fußbremsventil nicht betätigt wird. Wird das Fußbremsventil allerdings betätigt, verhindert die dadurch bewirkte Kolbenstellung vorzugsweise, dass Druckmittel mit dem Fußbrems-Eingangsdruck aus dem Entlüftungsraum und den Arbeitsraum in die Steueranschlüsse des Fußbremsventils gelangt. Bei einer manuellen oder automatisch gesteuerten, rein mechanischen Betätigung des Fußbremsventils wird somit eine Durchsetzung der elektropneumatischen Vorgabe verhindert.

Vorzugsweise ist die Bypass-Ventilanordnung monostabil, d.h. lediglich die erste Schaltstellung der Bypass-Ventilanordnung, in der der Entlüftungsraum entlüftet wird, ist stabil. Unter stabil wird hierbei verstanden, dass ohne eine elektrische Ansteuerung der Bypass-Ventilanordnung, d.h. im unbestromten Fall, automatisch die stabile (erste) Schaltstellung eingestellt wird. Dies kann beispielsweise durch eine entsprechende Federvorspannung des 3/2-Wegeventils oder der beiden 2/2-Wegeventile erreicht werden. Dadurch kann im normalen Betrieb auch außerhalb des Redundanzfalles sichergestellt werden, dass bei einem Ausfall der Energieversorgung eine Entlüftung sicher stattfinden kann, da die Bypass-Ventilanordnung automatisch in die erste Schaltstellung zurückfällt.

Die erste, stabile Schaltstellung wird hierbei standardmäßig eingestellt, wenn davon ausgegangen werden kann, dass der Fahrer auch im Redundanzfall noch bremsend eingreifen kann. Die zweite, nicht-stabile Schaltstellung wird hingegen eingestellt, wenn festgestellt wird, dass im Redundanzfall das Fußbremsventil nicht betätigt wird, weil der Fahrer beispielsweise nicht am Platz ist oder unaufmerksam ist. Die zweite Schaltstellung kann hierbei beispielsweise durch ein dauerhaftes Bestromen kontinuierlich eingestellt werden, so dass die Betriebsbremsen dauerhaft angezogen werden.

Gemäß einer vorteilhaften Weiterbildung kann mit der ersten Bypass-Ventilanordnung auch elektropneumatisch gesteuert eine abgestufte Einstellung des Betriebsbrems-Steuerdruckes bzw. des Betriebsbrems-Bremsdruckes erfolgen. Dazu kann die Bypass-Ventilanordnung von der Bypass-Steuereinrichtung beispielsweise gepulst angesteuert werden, d.h. die erste Bypass-Ventilanordnung bzw. das 3/2-Wegeventil wird abwechselnd bestromt und nicht bestromt. Vorzugweise wird das Bypass-Signal hierbei pulsweitenmoduliert vorgegeben. Dadurch wird abwechselnd zwischen der ersten und der zweiten Schaltstellung hin und hergewechselt, so dass der Fußbrems-Eingangsdruck je nach Dauer der eingestellten ersten und zweiten Schaltstellung zwischen dem ggf. druckangepassten Bypass-Vorratsdruck und dem Atmosphärendruck in der Bypass-Entlüftung hin und her schwingt, d.h. in Abhängigkeit von den beiden Drücken vorgegeben wird. Daher ergibt sich auch ein vom Fußbremsventil ausgegebener pulsierender Verlauf des Betriebsbrems-Steuerdruckes. Daraus folgt wiederum ein vom jeweiligen Achsmodulator ausgesteuerter ebenfalls pulsierender Betriebsbrems-Bremsdruck, der von den Betriebsbremsen in entsprechender Weise in eine Bremsung umgesetzt wird.

Auch bei der zweiten Bypass-Ventilanordnung kann eine abgestufte Vorgabe des Fußbrems-Eingangsdruckes nach dieser Systematik erfolgen, indem die beiden 2/2-Wegeventile pulsweitenmoduliert angesteuert werden, beispielsweise falls kein Drucksensor zum Messen des Fußbrems-Eingangsdruckes vorhanden ist und somit eine Druckregelung nicht möglich ist.

Vorteilhafterweise kann dadurch eine Art Stotterbremse ausgebildet werden, durch die das Fahrzeug abwechselnd stärker und weniger stark abgebremst wird. Dies kann sich positiv auf die Fahrstabilität und die Lenkbarkeit des Fahrzeuges auswirken, denn im Redundanzfall, d.h. bei einem elektronischen Ausfall, ist nicht sichergestellt, die im Fahrzeug vorhandene Bremsschlupfregelung über eine ABS-Funktionalität korrekt funktioniert. Diese kann in diesem Ausnahmefall durch die Stotterbrems-Funktion ersetzt werden. Die Stotterbremsung kann vorteilhafterweise dadurch erreicht werden, dass sichergestellt wird, dass bei einer pulsweitenmodulierten Ansteuerung ein Wiederanlaufen eines zum Blockieren neigenden Rades erfolgen kann. Dies ist beispielsweise dann der Fall, wenn der Fußbrems-Eingangsdruck bzw. der Betriebsbrems-Bremsdruck zumindest für eine Grenz-Zeit von beispielsweise 0,25s wiederkehrend unter einen Grenz-Druck von beispielsweise 1bar fällt. In diesem Fall ist sichergestellt, dass ein zum Blockieren neigendes Rad sich wieder drehen kann.

Dadurch kann auch eine redundante ABS-Funktionalität mit zusätzlichen Komponenten gespart werden. Auch hier wird erkannt, dass für den Ausnahmefall eines elektrischen Defekts Kosten gespart werden können, indem eine einfache Ersatzfunktion ausgebildet wird, die ebenfalls für eine sichere Bremsung sorgen kann.

Das durch die gepulste Ansteuerung bewirkte Umschaltverhalten wird hierbei derartig ausgelegt, dass bei einer Stotterbremsung akzeptable Werte für die Fahrzeug-Verzögerung, die Fahrstabilität sowie die Lenkbarkeit eingestellt werden.

Die durchströmten Leitungen und Ventile sorgen hierbei für eine Art Tiefpassfilterung, die dafür sorgt, dass der Fußbrems-Eingangsdruck und somit auch der Betriebsbrems-Steuerdruck weniger stark ansteigen bzw. abfallen, wenn zwischen den beiden Schaltstellungen hin und her geschaltet wird. Die Flanken des schwingenden Fußbrems-Eingangsdruck-Verlaufes steigen somit weniger stark an bzw. fallen weniger stark ab, so dass insbesondere bevor der Fußbrems-Eingangsdruck in der zweiten Schaltstellung den Bypass-Vorratsdruck erreicht, wieder in die erste Schaltstellung umgeschaltet wird; der Verlauf wird also insgesamt geglättet.

Dieses Glätten kann weiter optimiert werden, indem gemäß einer vorteilhaften Weiterbildung der Bypass-Vorratsdruck und somit auch der Fußbrems-Eingangsdruck druckangepasst wird, so dass vermieden wird, dass der Betriebsbrems-Steuerdruck bei einem Umschalten in die zweite Schaltstellung der Bypass-Ventilanordnung auf einen sehr hohen Druck ansteigt. Dazu sind mehrere Varianten möglich, die alternativ oder ergänzend vorgesehen sein können:
In der einfachsten Ausführungsform ist zwischen dem Bypass-Druckmittelvorrat, der in der zweiten Schaltstellung den Fußbrems-Eingangsdruck vorgibt, und der Bypass-Ventilanordnung eine Drossel angeordnet. Diese Drossel reduziert einen Volumenstrom des aus dem Bypass-Druckmittelvorrat strömenden Druckmittels. Dadurch wird der Fußbrems-Eingangsdruck bei einem Umschalten von der ersten in der zweiten Schaltstellung nicht abrupt auf den Bypass-Vorratsdruck aufgebaut sondern steigt langsam an, da durch die Drossel eine Engstelle im Strömungspfad ausgebildet wird. Ein Umschalten zurück in die erste Schaltstellung erfolgt also zu einem Zeitpunkt, an dem der Fußbrems-Eingangsdruck weniger stark angestiegen ist, so dass der Verlauf insgesamt weiter geglättet wird.

Gemäß einer weiteren Ausführungsform kann vorgesehen sein, von vornherein einen Bypass-Druckmittelvorrat zu verwenden, in dem ein geringerer Bypass-Vorratsdruck vorherrscht. Dazu kann beispielsweise ein für eine Parkbremse vorgesehener Druckmittelvorrat verwendet werden, der einen Vorratsdruck von maximal 8bar aufweist.

Gemäß einer weiteren Ausführungsform kann auch ein Druckminderer als Bauteil eingebaut werden, der Druckmittel aus dem Bypass-Druckmittelvorrat nur bis zu einem bestimmten Grenzdruck durchlässt.

Durch die Druckbegrenzung bzw. Volumenstrombegrenzung des ausgesteuerten Bypass-Vorratsdruckes kann in allen Fällen zusätzlich erreicht werden, dass bei einem unbeabsichtigten Umschalten der Bypass-Ventilanordnung in die zweite Schaltstellung auch eine dadurch ungewollt angeforderte Fahrzeug-Verzögerung begrenzt wird.

Gemäß einer vorteilhaften Weiterbildung kann von der Bypass-Steuereinrichtung über einen Drucksensor oder einen Druckschalter, an denen der Betriebsbrems-Steuerdruck einer bestimmten Fahrzeugachse anliegt, festgestellt werden, ob der Fahrer das Fußbremsventil betätigt oder nicht. Bei einer Betätigung gibt der Druckschalter oder der Drucksensor ein entsprechendes Signal an die Bypass-Steuereinrichtung aus. Dadurch kann im Redundanzfall festgestellt werden, ob der Fahrer reagiert, und die redundante elektrische Ansteuerung über die Bypass-Ventilanordnung ggf. abgeschaltet werden. Weiterhin können über den dadurch hergeleiteten Fahrerwunsch durch eine Plausibilisierung latente Fehler erkannt werden.

Vorteilhafterweise wird die Bypass-Steuereinrichtung (Bypass-ECU) über eine erste Energiequelle und ergänzend über eine davon unabhängige zweite Energiequelle versorgt und die Betriebsbrems-Steuereinrichtung (ECU) des Bremssystems lediglich über die erste Energiequelle, so dass bei einem Ausfall der elektrischen Ansteuerung über die Betriebsbrems-Steuereinrichtung (ECU) dennoch eine redundante elektrisch gesteuerte Bremsung bewirken zu können. Eine Energieversorgung im Redundanzfall kann aber auch durch einen Generator, beispielsweise eine Lichtmaschine, und/oder einen Kurzzeitspeicher und/oder einen Hochvoltspeicher gewährleistet werden, die jeweils unabhängig von der ersten Energiequelle funktionieren.

Die Erfindung wird im Folgenden anhand der beiliegenden Zeichnung erläutert. Es zeigen:
- Fig. 1a: ein erfindungsgemäßes Bremssystem mit einer ersten By-pass-Ventilanordnung als Blockschaltbild;
- Fig. 1b, c, d: Varianten zur Energieversorgung des elektropneumatisch gesteuerten Bremssystems gemäß Fig. 1a;
- Fig. 2: ein zeitlicher Verlauf eines gepulsten Fußbrems-Eingangsdruckes;
- Fig. 3: ein beispielhafter Aufbau eines Fußbremsventils;
- Fig. 4: das Bremssystem mit einer zweiten Bypass-Ventilanordnung;
- Fig. 5: ein Bremssystem mit einer rein pneumatischen Ansteuerung von Betriebsbremsen; und
- Fig. 6: ein Flussdiagramm zur Durchführung des Verfahrens.

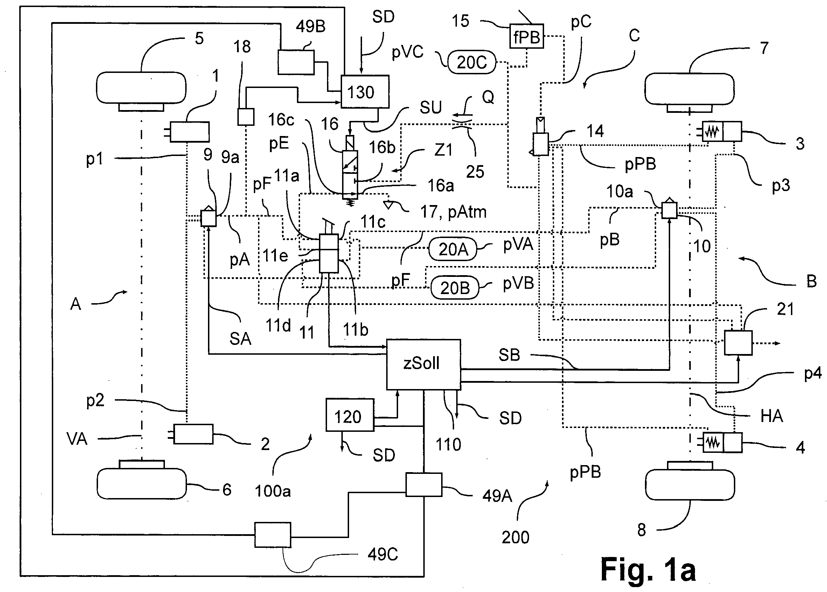

In der Ausführungsform gemäß Fig. 1a ist ein Ausschnitt aus einem elektropneumatischen Bremssystem 100a eines Fahrzeuges 200, insbesondere Nutzfahrzeuges, als Blockschaltbild dargestellt, wobei das elektropneumatische Bremssystem als EBS-Bremssystem 100a ausgeführt ist, d.h. eine Bremsvorgabe erfolgt im Normalbetrieb rein elektrisch. Das EBS-Bremssystem 100a weist dazu vier Radbremsen 1, 2, 3, 4 auf, die dazu dienen, die Räder 5, 6, 7, 8 des Fahrzeuges 200 abzubremsen. Zum Abbremsen sind drei Bremskreise A, B, C vorgesehen, denen jeweils ein Druckmittelvorrat 20A, 20B, 20C zugeordnet ist, um die jeweiligen Bremskreise A, B, C mit einem Druckmittel zu versorgen und somit den Aufbau eines Bremsdruckes p1, p2, p3, p4, pPB für die jeweiligen Radbremsen 1, 2, 3, 4 zu ermöglichen. In jedem Druckmittelvorrat 20A, 20B, 20C herrscht ein entsprechender Vorratsdruck pVA, pVB, pVC, wobei im ersten und im zweiten Druckmittelvorrat 20A, 20B ein Vorratsdruck pVA, pVB von beispielsweise 12bar und in einem Bypass-Druckmittelvorrat 20C ein Bypass-Vorratsdruck pVC von beispielsweise 8bar vorherrscht. Der Bypass-Druckmittelvorrat 20C entspricht hierbei einem auch einen dritten Bremskreis C, in dem eine Parkbremse betrieben wird, versorgenden Druckmittelvorrat.

In einem ersten Bremskreis A sind die Radbremsen 1, 2 an den Rädern 5, 6 einer Vorderachse VA angeordnet, wobei die Radbremsen 1, 2 als Betriebsbremsen ausgeführt sind. Die Radbremsen 3, 4 an einer Hinterachse HA sind als kombinierte Federspeicher- und Betriebsbremsen ausgeführt, so dass die Räder 7, 8 der Hinterachse HA unabhängig voneinander zum einen über einen zweiten Bremskreis B über eine Betriebsbremsfunktion und zusätzlich auch über den dritten Bremskreis C über eine Parkbremsfunktion abgebremst werden können.

In den ersten beiden Bremskreisen A, B werden die Betriebsbrems-Bremsdrücke p1, p2, p3, p4 im Normalbetrieb über elektrisch gesteuerte Achsmodulatoren 9, 10 erzeugt, indem von einer Betriebsbrems-Steuereinrichtung 110 (ECU) Steuersignale SA, SB an die Achsmodulatoren 9, 10 elektrisch übermittelt werden, die dann versorgt vom entsprechenden Druckmittelvorrat 20A, 20B einen bestimmten Betriebsbrems-Bremsdruck p1, p2, p3, p4 aussteuern. Die Höhe der Betriebsbrems-Bremsdrücke p1, p2, p3, p4 ergibt sich insbesondere aus einer angeforderten Fahrzeug-Soll-Verzögerung zSoll, die gemäß diesem Ausführungsbeispiel aus einer vom Fahrer über ein Fußbremsventil 11 manuell vorgegebenen Anforderung oder von einer Assistenz-Steuereinrichtung 120 (ADAS-ECU, (A)dvanced-(D)river-(AS)sistance), die zur automatisierten Steuerung des Fahrzeuges 200 vorgesehen ist, folgt.

Auf einen ABS-Bremsschlupffall an den Rädern 5, 6 7, 8 beiden Fahrzeugachsen VA, HA kann durch entsprechende elektrische Ansteuerung des jeweiligen Achsmodulators 9, 10 reagiert werden.

Bei einem Ausfall oder einem Defekt in der elektronischen Ansteuerung der beiden Achsmodulatoren 9, 10 kann auf eine pneumatische Rückfallebene gewechselt werden, indem ein durch eine automatisiert oder durch den Fahrer vorgegebene mechanische Betätigung des Fußbremsventils 11, d.h. durch eine mechanische Vorgabe V1 erzeugter Betätigungsdruck pF als ein pneumatischer Betriebsbrems-Steuerdruck pA, pB an den jeweiligen Achsmodulator 9, 10 ausgesteuert wird.

Ein erster Betriebsbrems-Steuerdruck pA wird hierbei von einem ersten Steueranschluss 11a des Fußbremsventils 11 an einen ersten pneumatischen Steuereingang 9a am ersten Achsmodulator 9 und ein zweiter Betriebsbrems-Steuerdruck pB von einem zweiten Steueranschluss 11b des Fußbremsventils 11 an einen zweiten pneumatischen Steuereingang 10a an dem zweiten Achsmodulator 10 geleitet. Der jeweilige Achsmodulator 9, 10 verstärkt dann den Betriebsbrems-Steuerdruck pA, pB entsprechend und gibt diesen als Betriebsbrems-Bremsdruck p1, p2, p3, p4 an den entsprechenden Bremskreis A, B aus. Versorgt wird das Fußbremsventil 11 dabei über einen ersten Versorgungsanschluss 11c vom ersten Druckmittelvorrat 20A und über einen zweiten Versorgungsanschluss 11d vom zweiten Druckmittelvorrat 20B.

Somit kann von einer elektronischen Ansteuerung der Achsmodulatoren 9, 10 im pneumatischen Redundanzfall auf eine pneumatische Ansteuerung durch mechanische Betätigung des Fußbremsventils 11 gewechselt werden.

Im dritten Bremskreis C ist ein Parkbrems-Relaisventil 14 vorgesehen, das pneumatisch über einen von einem Parkbremsventil 15 vorgegebenen Parkbrems-Steuerdruck pC angesteuert wird, den das Parkbrems-Relaisventil 14 in gewohnter Weise luftmengenverstärkt und als Parkbrems-Bremsdruck pPB an den Federspeicherteil in den Radbremsen 3, 4 der Hinterachse HA ausgibt. Der Parkbrems-Steuerdruck pC wird gemäß dieser Ausführungsform in Abhängigkeit einer manuellen Betätigung des Parkbremsventils 15 durch den Fahrer erzeugt, der dadurch eine bestimmte Parkbremskraft fPB vorgibt. Es kann aber auch eine (nicht dargestellte) elektronische Parkbremsvorgabe erfolgen.

Über ein Anhänger-Steuerventil 21 kann der erste Betriebsbrems-Steuerdruck pA oder der Parkbrems-Steuerdruck pPB auch an einen nicht dargestellten Anhänger ausgegeben werden, um diesen abzubremsen.

In der erfindungsgemäßen Ausführung ist das Fußbremsventil 11 gemäß Fig. 1a weiterhin über einen Fußbrems-Entlüftungsanschluss 11e mit einem Wege-Ausgang 16c einer als 3/2-Wegeventil ausgeführten ersten Bypass-Ventilanordnung 16 verbunden, über den dem Fußbremsventil 11 je nach Schaltstellung Z1, Z2 des 3/2-Wegeventils 16 ein bestimmter Fußbrems-Eingangsdruck pE vorgegeben wird. Das 3/2-Wegeventil 16 ist als elektrisch steuerbares 3/2-Wegeventil, beispielsweise als Solenoid-Ventil, ausgeführt und kann in zwei Schaltstellungen Z1, Z2 gebracht werden. Ein erster Wege-Eingang 16a des 3/2-Wegeventils 16 ist mit einer Bypass-Entlüftung 17 und ein zweiter Wege-Eingang 16b mit dem auch den dritten Bremskreis C versorgenden Bypass-Druckmittelvorrat 20C verbunden.

In der ersten Schaltstellung Z1 des 3/2-Wegeventils 16 wirkt der in der Bypass-Entlüftung 17 vorherrschende Druck, der in etwa einem Atmosphärendruck pAtm (ca. 1bar) entspricht, auch am Wege-Ausgang 16c, so dass sich durch eine Entlüftung des Fußbremsventils 11 ein Fußbrems-Eingangsdruck pE am Fußbrems-Entlüftungsanschluss 11e des Fußbremsventils 11 einstellt, der in etwa dem Atmosphärendruck pAtm entspricht. In der zweiten Schaltstellung Z2 des 3/2-Wegeventils 16 wird der Bypass-Druckmittelvorrat 20C mit dem Wege-Ausgang 16c verbunden, so dass sich als Fußbrems-Eingangsdruck pE in etwa der im Bypass-Druckmittelvorrat 20C vorherrschende Bypass-Vorratsdruck pVC am Fußbrems-Entlüftungsanschluss 11e des Fußbremsventils 11 einstellt. D.h. es kann zwischen einem niedrigen Druckniveau pLow in der ersten Schaltstellung Z1 und einem hohen Druckniveau pHigh in der zweiten Schaltstellung Z2 hin und hergeschaltet werden.

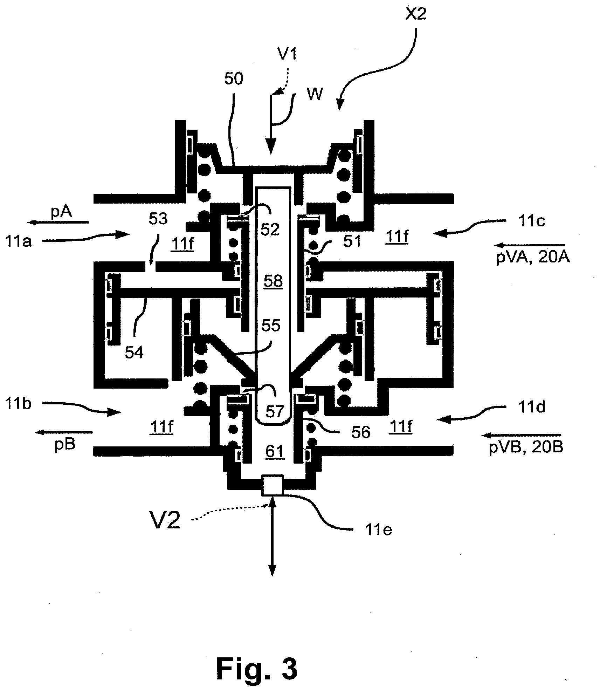

Somit wird in der ersten Schaltstellung Z1 ein niedriger Fußbrems-Eingangsdruck pE und in der zweiten Schaltstellung Z2 ein hoher Fußbrems-Eingangsdruck pE am Fußbrems-Entlüftungsanschluss 11e des Fußbremsventils 11 erzeugt. Dieser wird vom Fußbremsventil 11 folgendermaßen als Betriebsbrems-Steuerdruck pA, pB an die Achsmodulatoren 9, 10 in den entsprechenden Bremskreisen A, B verteilt:
Gemäß Fig. 3 ist beispielhaft ein zweikreisiges Fußbremsventil 11 mit den entsprechenden Steueranschlüssen 11a, 11b, Versorgungsanschlüssen 11c, 11d und dem Fußbrems-Entlüftungsanschluss 11e dargestellt, das mechanisch über den Steuerkolben 50 durch den Fahrer oder automatisiert betätigt werden kann. In einer ersten Steuerstellung X1 wird das Fußbremsventil 11 manuell oder automatisiert betätigt. Gelangt der Steuerkolben 50 dabei ab einem bestimmten Betätigungsweg W gegen einen ersten Kolben 51 (Abstufungskolben), wird dieser derartig nach unten gedrückt, dass eine erste Einlassöffnung 52 je nach Betätigungsweg W kontinuierlich geöffnet wird, wodurch ein Durchströmen des Druckmittels aus dem ersten Druckmittelvorrat 20A über den ersten Versorgungsanschluss 11c sowie einen Arbeitsraum 11f in den ersten Steueranschluss 11a ermöglicht wird. Der Arbeitsraum 11f ist somit der Teil des Fußbremsventils 11, durch den das die beiden Bremskreise A, B versorgende Druckmittel strömt. Die Höhe des dadurch aus dem ersten Steueranschluss 11a ausgegebenen ersten Betriebsbrems-Steuerdruckes pA für den ersten Achsmodulator 9 im ersten Bremskreis A richtet sich nach dem Betätigungsweg W.

Bei einer Betätigung des Steuerkolbens 50 und Freigabe des Druckmittels aus dem ersten Druckmittelvorrat 20A wirkt über eine Öffnung 53 gleichzeitig auch ein Druck auf einen zweiten Kolben 54 (Relaiskolben), der sich daraufhin ebenfalls nach unten bewegt und einen dritten Kolben 55 mitnimmt. Dieser gelangt daraufhin gegen einen vierten Kolben 56, der dadurch ebenfalls nach unten bewegt wird, wodurch eine zweite Einlassöffnung 57 je nach Betätigungsweg W kontinuierlich geöffnet wird. Dadurch kann ein Durchströmen des Druckmittels aus dem zweiten Druckmittelvorrat 20B über den zweiten Versorgungsanschluss 11d und den Arbeitsraum 11f in den zweiten Steueranschluss 11b ermöglicht werden und ein entsprechender zweiter Betriebsbrems-Steuerdruck pB an den zweiten Achsmodulator 10 des zweiten Bremskreises B vorgegeben werden.

Der dritte Kolben 55 kann hierbei auch mechanisch betätigt werden, indem bei entsprechender Betätigung des Steuerkolbens 50 dieser gegen einen mit dem dritten Kolben 55 fest verbundenen Stößel 58 drückt.

Sobald der Steuerkolben 50 und der dritte Kolben 55 gegen den ersten Kolben 51 bzw. den vierten Kolben 56 drücken, wird zum einen das Druckmittel für den entsprechenden Bremskreis A, B freigegeben und gleichzeitig eine Verbindung der Steueranschlüsse 11a, 11b zu einem zum Fußbrems-Entlüftungsanschluss 11e führenden Entlüftungsraum 61 geschlossen. Diese Verbindung zwischen den Steueranschlüssen 11a, 11b und dem Entlüftungsraum 61 wird lediglich bei Nicht-Betätigung des Fußbremsventils 11 in einer zweiten Steuerstellung X2 des Steuerkolbens 50 hergestellt, so dass die Bremskreise A, B entsprechend entlüftet werden können, um eine wirkende Bremskraft abzubauen, indem der Betriebsbrems-Bremsdruck p1, p2, p3, p4 bzw. der Betriebsbrems-Steuerdruck pA, pB reduziert wird.

Dies ist im normalen Betrieb der Fall, wenn bei nicht-betätigtem Fußbremsventil 11 das 3/2-Wegeventil 16 in die erste Schaltstellung Z1 gebracht wird. Dann werden über das 3/2-Wegeventil 16, den Fußbrems-Entlüftungsanschluss 11e, den Entlüftungsraum 61, den Arbeitsraum 11f und die beiden Steueranschlüsse 11a, 11b des Fußbremsventils 11 beide Bremskreise A, B mit der Bypass-Entlüftung 17 kurzgeschlossen und somit eine Reduzierung des Betriebsbrems-Steuerdruckes pA, pB und somit auch eine Reduzierung des Betriebsbrems-Bremsdruckes p1, p2, p3, p4 erreicht.

In der zweiten Schaltstellung Z2 des 3/2-Wegeventils 16 hingegen wird der Fußbrems-Entlüftungsanschluss 11e des Fußbremsventils 11 mit dem Bypass-Druckmittelvorrat 20C verbunden, so dass ein hoher Druck - der Bypass-Vorratsdruck pVC - von beispielweise ca. 8bar im Entlüftungsraum 61 vorherrscht. Der Steuerkolben 50 und gemäß diesem Ausführungsbeispiel auch die Kolben 51, 54, 55, 56 werden durch den wirkenden Druck zusätzlich in ihren geschlossenen Stellungen gehalten, so dass Druckmittel mit in etwa dem Bypass-Vorratsdruck pVC aus dem Entlüftungsraum 61 über den Arbeitsraum 11f lediglich in die beiden Steueranschlüsse 11a, 11b gelangt. Dadurch wird ein in etwa dem Bypass-Vorratsdruck pVC entsprechende Betriebsbrems-Steuerdruck pA, pB an den jeweiligen Achsmodulator 9, 10 des jeweiligen Bremskreises A, B ausgegeben, so dass das Fahrzeug 200 darüber abgebremst werden kann. Eine Beeinflussung des Bypass-Vorratsdruckes pVC findet allenfalls durch das Durchströmen des Fußbrems-Entlüftungsanschlusses 11e, des Entlüftungsraumes 61, dem Arbeitsraum 11f sowie der Steueranschlüsse 11a, 11b statt, so dass das Fußbremsventil 11 keine abstufende Wirkung auf den Fußbrems-Eingangsdruck pE hat. Vielmehr wird der Fußbrems-Eingangsdruck pE im Wesentlichen unbeeinflusst durch das Fußbremsventil 11 geleitet. Die Höhe des Fußbrems-Eingangsdruckes pE wird bereits vor dem Eintritt in das Fußbremsventil 11 festgelegt.

Daher können die Betriebsbremsen 1, 2, 3, 4 über das Fußbremsventil 11 entweder manuell oder automatisiert in Abhängigkeit einer mechanischen Vorgabe V1, d.h. durch ein manuelles oder automatisiertes mechanisch abgestuftes Betätigen des Fußbremsventils 11, oder durch eine elektropneumatische Vorgabe V2, d.h. eine elektrische Ansteuerung des 3/2-Wegeventils 16 und eine pneumatische Ausgabe eines entsprechenden Fußbrems-Eingangsdruckes pE, angesteuert werden, wobei bei der elektropneumatischen Vorgabe V2 keine Beeinflussung des Fußbrems-Eingangsdruckes pE in Abhängigkeit einer Bewegung des Steuerkolbens 50, d.h. einer Betätigung des Fußbremsventils 11 stattfindet.

Unter mechanische Betätigung des Fußbremsventils 11 wird hierbei eine beliebige - manuell oder automatisch angeforderte, beispielsweise elektrisch, mechanisch oder pneumatisch verursachte - Bewegung des Steuerkolbens 50 um den Betätigungsweg W verstanden. Der Steuerkolben 50 ist hierbei derjenige Kolben im Fußbremsventil 11, der bei einer Betätigung einer Betätigungseinrichtung, beispielsweise eines Bremspedals, diese mechanische Betätigung umsetzt in ein betätigungsabhängiges Durchströmen von Druckmittel vom Druckmittelvorrat 20A, 20B durch die Versorgungsanschlüsse 11c, 11d und den Arbeitsraum 11f zu den Steueranschlüssen 11a, 11b des Fußbremsventils 11. Er sorgt somit für eine abgestufte Freigabe von Druckmittel aus einem der Druckmittelvorräte 20A, 20B an die Achsmodulatoren 9, 10 oder die Radbremsen 1, 2, 3, 4, wobei dazu auf die weiteren Kolben 51, 54, 55, 56 in dem Arbeitsraum 11f wie oben beschrieben eingewirkt wird. Der Steuerkolben 50 selbst begrenzt in diesem Ausführungsbeispiel den Arbeitsraum 11f lediglich nach oben hin. Ein in den Arbeitsraum 11f einströmendes Druckmittel wirkt somit auf den Steuerkolben 50 allenfalls entlastend.

Bei unbetätigtem Fußbremsventil 11 kann somit im Redundanzfall, beispielsweise bei Unaufmerksamkeit des Fahrers oder wenn sich dieser nicht am Platz befindet, dennoch eine Bremsung bewirkt werden, indem elektronisch das 3/2-Wegenventil 16 in die zweite Schaltstellung Z2 überführt wird, um von einer Entlüftung auf einen hohen Betriebsbrems-Steuerdruck pA, pB zu wechseln, durch den die Radbremsen 1, 2, 3, 4 vorzugsweise vollständig betätigt werden. Somit wird in einfacher Weise erreicht, dass das Fahrzeug 200 bei eingestellter zweiter Schaltstellung Z2 mit maximaler Bremswirkung elektronisch gesteuert in den Stillstand überführt werden kann. Und zwar auch dann, wenn eine elektronische Ansteuerung der Achsmodulatoren 9, 10 fehlschlägt.

Gesteuert wird das Einlegen der entsprechenden Schaltstellung Z1, Z2 des 3/2-Wegeventils 16 durch eine Bypass-Steuereinrichtung 130 (Bypass-ECU), die beispielsweise bei einem Ausfall der Assistenz-Steuereinrichtung 120 oder der Betriebsbrems-Steuereinrichtung 110 oder der elektrischen Ansteuerung des entsprechenden Achsmodulators 9, 10 in die Bremsung eingreifen kann, indem sie ein Bypass-Signal SU ausgibt, über das das 3/2-Wegeventil 16 bestromt wird. Ein Ausfall der Betriebsbrems- oder der Assistenz-Steuereinrichtung 110, 120 oder der elektrischen Ansteuerung der Achsmodulatoren 9, 10 kann hierbei beispielsweise über ein Diagnose Signal SD festgestellt werden.

Um im Redundanzfall eine Versorgung der Bypass-Steuereinrichtung 130 mit Energie sicherzustellen, ist eine zweite Energiequelle 49B vorgesehen, die von einer die Betriebsbrems-, die Assistenz- und die Bypass-Steuereinrichtung 110, 120, 130 versorgenden ersten Energiequelle 49A unabhängig ist. Die erste Energiequelle 49A und die zweite Energiequelle 49B sind beide an einen Generator 49C, beispielsweise eine Lichtmaschine des Nutzfahrzeugs 200, angeschlossen. Bei einem Ausfall der ersten Energiequelle 49A, bei der das elektropneumatische Bremssystem 100a nicht mehr über die Betriebsbrems-Steuereinrichtung 110 und die Achsmodulatoren 9, 10 elektrisch gesteuert werden kann, ist somit eine elektropneumatische Ansteuerung über die Bypass-Steuereinrichtung 130 sichergestellt.

Alternativ kann auch lediglich die erste an den Generator 49C angeschlossene Energiequelle 49A verwendet werden, die über eine Sicherung mit der Betriebsbrems-Steuereinrichtung 110 und der Assistenz-Steuereinrichtung 120 und über eine weitere Sicherung mit der Bypass-Steuereinrichtung 130 verbunden ist.

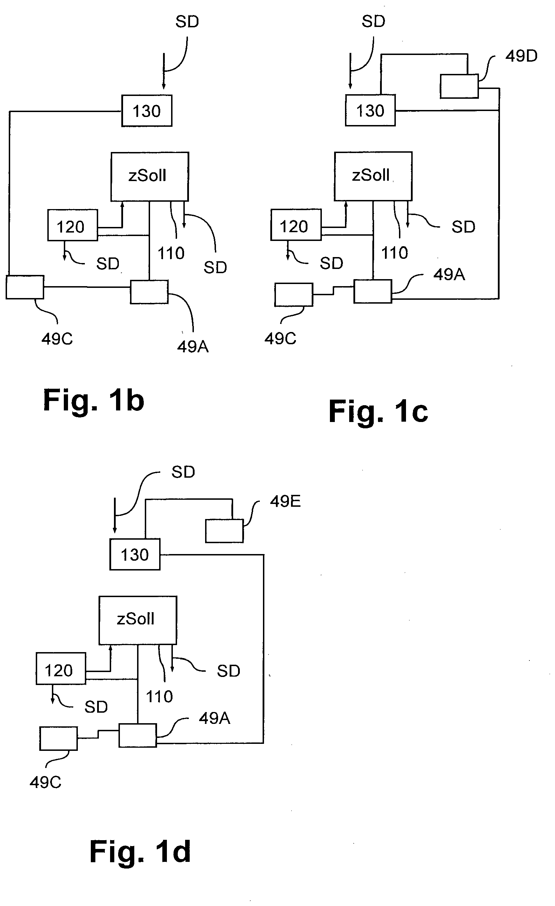

Gemäß Fig. 1b, c, d sind alternative Konzepte für eine redundante Energieversorgung gezeigt. Gemäß einer in Fig. 1b dargestellten alternativen Ausführungsform ist vorgesehen, die Bypass-Steuereinrichtung 130 in entsprechender Weise direkt an den Generator 49C anzuschließen und darüber eine Energieversorgung sicherzustellen und die Betriebsbrems-Steuereinrichtung 110 und die Assistenz-Steuereinrichtung 120 an die erste Energiequelle 49A. Der Generator 49C und die erste Energiequelle 49A sind dabei derartig voneinander getrennt, dass ein Kurzschluss im Generator 49C nicht zwangsläufig für einen Kurzschluss in der ersten Energiequelle 49A und umgedreht sorgt, so dass beide im Redundanzfall unabhängig voneinander Energie liefern können.

Gemäß einer in Fig. 1c dargestellten Ausführungsform ist vorgesehen, einen Kurzzeitspeicher 49D, beispielsweise einen Kondensator, insbesondere ein Power-Cap, als Energiequelle zu verwenden, der von der ersten Energiequelle 49A im Normalbetrieb aufgeladen wird. Fällt die erste Energiequelle 49A aus, wird der aufgeladene Kurzzeitspeicher 49D als Energiequelle für die Bypass-Steuereinrichtung 130 verwendet.

Gemäß einer weiteren Ausführungsform ist gemäß Fig. 1d vorgesehen, einen Hochvoltspeicher 49E als redundante Energieversorgung zu verwenden, der in Hybridfahrzeugen als Energiequelle für einen Antrieb verwendet wird. Dieser ist ebenfalls unabhängig von der ersten Energiequelle 49A und kann somit als redundante Energiequelle für die Bypass-Steuereinrichtung 130 verwendet werden.

Alternativ kann auch ein zusätzliches redundantes Bordnetz aufgebaut werden.

In der ersten Schaltstellung Z1 ist das 3/2-Wegeventil 16 unbestromt, d.h. das 3/2-Wegeventil 16 wird von der Bypass-Steuereinrichtung 130 nicht mit dem Bypass-Signal SU angesteuert. Diese erste Schaltstellung Z1 ist somit eine stabile Schaltstellung, in die das 3/2-Wegeventil 16 ohne ein vorgegebenes Bypass-Signal SU automatisch zurückfällt, was beispielsweise durch eine Federvorspannung erreicht werden kann. Somit wird auch bei einem Ausfall der Bypass-Steuereinrichtung 130 oder der zweiten Energiequelle 49B sichergestellt, dass bei nichtbetätigtem Fußbremsventil 11 ein Druckablassen über die Bypass-Entlüftung 17 und somit eine Rücknahme einer ggf. vorab betätigten Bremsung erreicht wird. Die zweite Schaltstellung Z2 wird durch Ausgeben eines entsprechenden Bypass-Signals SU bewirkt, das für ein Bestromen des 3/2-Wegeventils 16 sorgt.

Um im Redundanzfall auch eine elektronisch vorgegebene, abgestufte Bremswirkung erreichen zu können, wird das 3/2-Wegeventil 16 von der Bypass-Steuereinrichtung 130 gepulst angesteuert, beispielsweise mit einem pulsweitenmodulierten Bypass-Signal SU. D.h. das 3/2-Wegeventil 16 wird abwechselnd zwischen der ersten Schaltstellung Z1 und der zweiten Schaltstellung Z2 umgeschaltet. Dadurch wird dem Fußbrems-Entlüftungsanschluss 11e ein pulsierender Fußbrems-Eingangsdruck pE vorgegeben, der über die Steueranschlüsse 11a, 11b für einen ebenfalls pulsierenden Betriebsbrems-Steuerdruck pA, pB in den jeweiligen Bremskreisen A, B sorgt, der in dem Fall zwischen dem Atmosphärendruck pAtm (erste Schaltstellung Z1) und dem Bypass-Vorratsdruck pVC (zweite Schaltstellung Z2) hin und her schwingt.

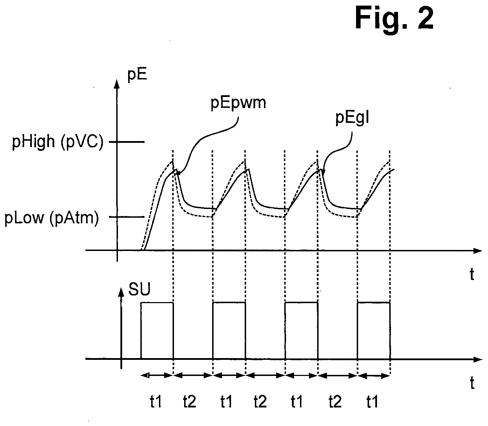

Beispielhaft ist ein derartiger zeitlicher Verlauf des Fußbrems-Eingangsdruckes pE in Fig. 2 dargestellt, wobei sich durch die Pulsweitenmodulation (PWM) des Bypass-Signals SU ein Fußbrems-Eingangsdruck-Verlauf pEpwm (gestrichelter Verlauf) ergibt, der insbesondere abhängig ist von einer Puls-Zeit t1, die die Dauer einer gepulsten Ansteuerung über das Bypass-Signal SU, d.h. ein Bestromen des 3/2-Wegeventils 16, angibt, und einer Pausen-Zeit t2, die die Dauer im unbestromten Zustand des 3/2-Wegeventils 16 angibt. Die Pulszeit t1 kann zwischen 5ms und 1000ms liegen und die Pausen-Zeit t2 zwischen 0ms und 2000ms. Der Fußbrems-Eingangsdruck-Verlauf pEpwm schwingt zwischen dem Atmosphärendruck pAtm und in etwa dem Bypass-Vorratsdruck pVC hin und her, so dass je nach Zeitpunkt t ein unterschiedlicher Fußbrems-Eingangsdruck pE ausgegeben wird. Der Bypass-Vorratsdruck pVC wird hierbei nicht ganz erreicht, da der Fußbrems-Eingangsdruck pE durch das Durchströmen der Leitungen innerhalb der Puls-Zeit t1 nicht auf den Bypass-Vorratsdruck pVC ansteigen kann bevor das 3/2-Wegeventil 16 wieder in die erste Schaltstellung Z1 gebracht wird.

Um den schwingenden Fußbrems-Eingangsdruck-Verlauf pEpwm zu glätten und somit eine feinere Abstimmung zu erreichen, ist eine Drossel 25 vorgesehen, die eine Engstelle für das Druckmittel aus dem Bypass-Druckmittelvorrat 20C darstellt. Durch die Drossel 25 kann der Volumenstrom Q aus dem Bypass-Druckmittelvorrat 20C zum zweiten Wege-Eingang 16b reduziert werden. Am Wege-Ausgang 16c wird der Bypass-Vorratsdruck pVC somit beim Umschalten in die zweite Schaltstellung Z2 langsamer aufgebaut, so dass das 3/2-Wegeventil 16 bereits bei einen geringeren Fußbrems-Eingangsdruck pE in die erste Schaltstellung Z1 zurückgestellt wird. Der Fußbrems-Eingangsdruck-Verlauf pEpwm wird daher geglättet und es ergibt sich ein in Fig. 2 dargestellter geglätteter Fußbrems-Eingangsdruck-Verlauf pEgl (durchgezogener Verlauf), wobei dieser nicht mehr so stark ansteigt und somit für ein geringeres Ruckeln beim Bremsen sorgt.

Der schwingende pEpwm und geglättete Druckverlauf pEgl durch das pulsweitenmodulierte Ansteuern über das Bypass-Signal SU wirkt sich positiv auf die Fahrstabilität aus, da dies wie eine Art Stotterbremse SF wirkt, wenn für die Puls-Zeit t1 und für die Pausen-Zeiten t2 Zeiten verwendet werden, mit denen sichergestellt ist, dass ein Wiederanlaufen eines zum Blockieren neigenden Rades erfolgen kann. Dies ist beispielsweise dann der Fall, wenn der Fußbrems-Eingangsdruck pE bzw. der Betriebsbrems-Bremsdruck p1, p2, p3, 4 zumindest für eine Grenz-Zeit von beispielsweise 0,25s wiederkehrend unter einen Grenz-Druck von beispielsweise 1bar fällt. In diesem Fall ist sichergestellt, dass ein zum Blockieren neigendes Rad sich wieder dreht.

Dies ist insbesondere dann vorteilhaft, wenn im Redundanzfall eine Bremsschlupfregelung über die Betriebsbrems-Steuereinrichtung 110 und die elektrische Ansteuerung des jeweiligen Achsmodulators 9, 10 über das entsprechende Steuersignal SA, SB nicht mehr funktioniert. Die Puls-Zeit t1 und die Pausen-Zeit t2 können hierbei derartig ausgelegt werden, dass akzeptable Werte für die Verzögerung, die Fahrstabilität und die Lenkbarkeit bei einem redundanten Eingriff gewährleistet werden können.

Über einen zusätzlichen Drucksensor oder Druckschalter 18, der gemäß der gezeigten Ausführungsform den ersten Betriebsbrems-Steuerdruck pA an der Vorderachse VA abgreift, kann zusätzlich erreicht werden, dass die Bypass-Steuereinrichtung 130 bei einem Ausfall der Betriebsbrems-Steuereinrichtung 110 oder der elektrischen Funktion des Fußbremsventils 11 erkennen kann, ob der Fahrer über das Fußbremsventil 11 eine Bremsung angefordert hat. Dadurch kann darauf geschlossen werden, dass der Fahrer aktiv in die Bremsung eingreift und daher die redundante elektropneumatische Bremsung über die Bypass-Steuereinrichtung 130 abgebrochen werden kann. Andererseits kann diese Information auch an andere Assistenzsysteme im Fahrzeug 200 weitergeleitet werden, so dass diese auch bei einem Ausfall der Betriebsbrems-Steuereinrichtung 110 auf den Fahrerwunsch zurückgreifen können. Weiterhin können durch eine Plausibilisierung latente Fehler im elektropneumatischen Bremssystem 100a erkannt werden.

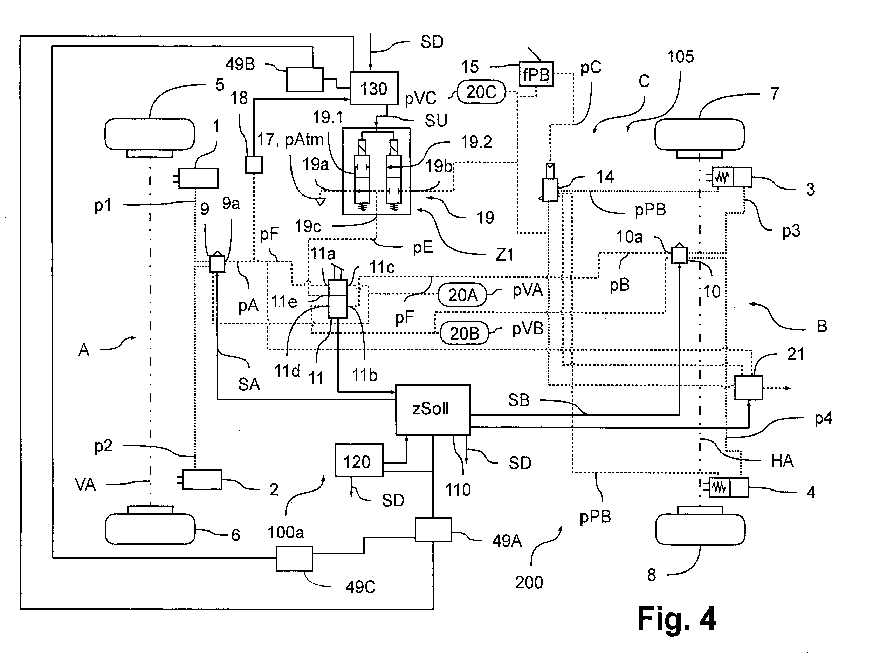

Gemäß Fig. 4 ist das Fußbremsventil 11 gemäß einer alternativen Ausführungsform über den Fußbrems-Entlüftungsanschluss 11e mit einem dritten Wegeanschluss 19c einer zweiten Bypass-Ventilanordnung 19 verbunden, über die dem Fußbremsventil 11 je nach Schaltstellung Z1, Z2, Z3 der zweiten Bypass-Ventilanordnung 19 ebenfalls ein bestimmter Fußbrems-Eingangsdruck pE vorgegeben werden kann. Die zweite Bypass-Ventilanordnung 19 wird hierbei durch zwei 2/2-Wegeventile 19.1, 19.2 ausgebildet, die je nach elektrischer Ansteuerung in einer ersten Schaltstellung Z1 der zweiten Bypass-Ventilanordnung 19 den dritten Wegeanschluss 19c über einen ersten Wegeanschluss 19a mit der Bypass-Entlüftung 17 kurzschließen und in einer zweiten Schaltstellung Z2 der zweiten Bypass-Ventilanordnung 19 den dritten Wegeanschluss 19c über einen zweiten Wegeanschluss 19b mit dem Bypass-Druckmittelvorrat 20C.

Um dies zu erreichen, wird in der ersten Schaltstellung Z1 der zweiten Bypass-Ventilanordnung 19 das zweite 2/2-Wegeventil 19.2 geschlossen und das erste 2/2-Wegeventil 19.1 geöffnet. In der zweiten Schaltstellung Z2 der zweiten Bypass-Ventilanordnung 19 wird das zweite 2/2-Wegeventil 19.2 geöffnet und das erste 2/2-Wegeventil 19.1 geschlossen. Durch ein Schließen beider 2/2-Wegeventile 19.1, 19.2 in einer dritten Schaltstellung Z3 der zweiten Bypass-Ventilanordnung 19 kann der Fußbrems-Eingangsdruck pE auch gehalten werden.

Gesteuert werden beide 2/2-Wegeventile 19.1, 19.2 durch die Bypass-Steuereinrichtung 130 durch das Bypass-Signal SU. Dadurch kann - wie auch mit dem 3/2-Wegeventil 16 in Fig. 1a - elektronisch gesteuert eine pneumatische Vorgabe eines Betriebsbrems-Steuerdruckes pA, pB in Abhängigkeit des Fußbrems-Eingangsdruckes pE zur redundanten pneumatischen Ansteuerung der Achsmodulatoren 9, 10 erfolgen.

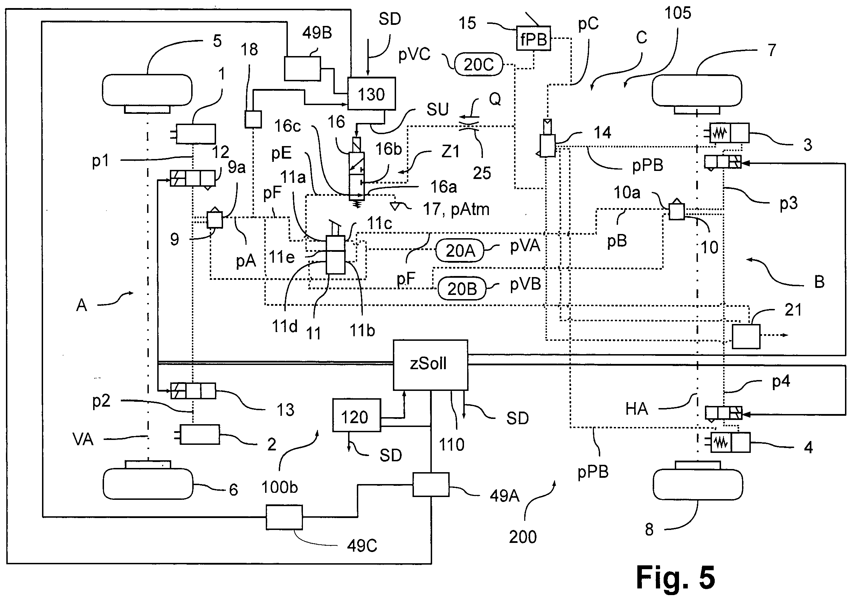

Gemäß Fig. 5 ist ein rein pneumatisches Bremssystem 100b ohne elektronische Ansteuerung der Achsmodulatoren 9, 10 dargestellt. D.h. im ersten und im zweiten Bremskreis A, B wird im Normalbetrieb ausschließlich durch eine pneumatische Vorgabe an die Achsmodulatoren 9, 10 über den jeweiligen pneumatischen Steuereingang 9a, 10a gebremst. Eine elektrische Steuerung über die Betriebsbrems-Steuereinrichtung 110 erfolgt lediglich, um eine ABS-Funktionalität auszubilden. Dazu sind den Radbremsen 1, 2 der Vorderachse VA und der Hinterachse HA jeweils zwei ABS-Steuerventile 12, 13 vorgeschaltet, über die gesteuert von der Betriebsbrems-Steuereinrichtung 110 auf einen Bremsschlupffall an einem der Räder 5, 6 der Vorderachse VA oder an einem der Räder 7, 8 der Hinterachse HA reagiert werden kann. Über die in dem Fall erste Bypass-Ventilanordnung 16 - bzw. das 3/2-Wegeventil kann - wie oben beschrieben - im Redundanzfall eine elektropneumatische Vorgabe V2 erfolgen. Die Ausführungen gemäß den vorherigen Figuren sind in analoger Weise auf dieses rein pneumatische Bremssystem 100b anwendbar, d.h. es kann insbesondere statt der ersten Bypass-Ventilanordnung 16 auch die zweite Bypass-Ventilanordnung 19 mit den beiden 2/2-Wegeventilen 19.1, 19.2 verwendet werden, um elektropneumatisch den Betriebsbrems-Steuerdruck pA, pB vorzugeben.

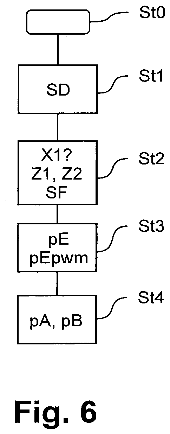

Die Ansteuerung der Bremssysteme 100a, 100b kann gemäß Fig. 6 beispielsweise folgendermaßen durchgeführt werden:
In einem anfänglichen Schritt St0 startet das Verfahren, beispielsweise mit dem Starten des Fahrzeuges 200.

In einem ersten Schritt St1 wird über das Diagnose-Signal SD von der Bypass-Steuereinrichtung 130 festgestellt, ob ein Ausfall oder ein Defekt in der elektrischen Ansteuerung der Achsmodulatoren 9, 10 vorliegt.

Ist dies der Fall, d.h. liegt ein Redundanzfall vor, wird in einem zweiten Schritt St2 von der Bypass-Steuereinrichtung 130 ein Bypass-Signal SU an die jeweilige Bypass-Ventilanordnung 16, 19 ausgegeben, um die jeweilige Bypass-Ventilanordnung 16, 19 von der ersten Schaltstellung Z1 in die zweite Schaltstellung Z2 umzuschalten und das Fahrzeug 200 in einen sicheren Zustand abzubremsen. Das elektrisch gesteuerte Abbremsen kann beispielsweise dann erfolgen, wenn festgestellt wurde, dass der Fahrer manuell nicht in die Bremsung eingreift, d.h. die erste Steuerstellung X1 des Steuerkolbens 50 nicht eingestellt ist, die eine elektropneumatische Vorgabe V2 verhindert. Dies kann beispielsweise über den Drucksensor bzw. Druckschalter 18 erfolgen.

Um im Redundanzfall eine Stotterbremsfunktion SF zu realisieren und somit die Fahrstabilität und die Lenkbarkeit zu verbessern, kann das Bypass-Signal SU auch pulsweitenmoduliert vorgegeben werden, d.h. es wird zwischen der ersten und der zweiten Schaltstellung Z1, Z2 hin und her geschaltet.

Aufgrund der Bestromung des 3/2-Wegeventils 16 oder der beiden 2/2-Wegeventile 19.1, 19.2 der jeweiligen Bypass-Ventilanordnung 16, 19 wird in einem dritten Schritt St3 ein Fußbrems-Eingangsdruck pE an den Fußbrems-Entlüftungsanschluss 11e des Fußbremsventils 11 ausgegeben, der bei einer kontinuierlichen Ansteuerung dem ggf. druckangepassten Bypass-Vorratsdruck pVC entspricht oder bei einer pulsweitenmodulierten Ansteuerung dem pulsierenden Fußbrems-Eingangs-Verlauf pEpwm, pEgl. Dadurch wird in einem vierten Schritt St4 bei unbetätigtem Fußbremsventil 11 ein entsprechender Betriebsbrems-Steuerdruck pA, pB an die Achsmodulatoren 9, 10 ausgegeben und darüber ein entsprechender Betriebsbrems-Bremsdruck p1, p2, p3, p4 erzeugt.

### Bezugszeichenliste (Bestandteil der Beschreibung)

- 1, 2, 3, 4: Radbremse
- 5, 6, 7, 8: Räder
- 9: erster Achsmodulator
- 9a: erster pneumatischer Steuereingang
- 10: zweiter Achsmodulator
- 10a: zweiter pneumatischer Steuereingang
- 11: Fußbremsventil
- 11a: erster Steueranschluss
- 11b: zweiter Steueranschluss
- 11c: erster Versorgungsanschluss
- 11d: zweiter Versorgungsanschluss
- 11e: Fußbrems-Entlüftungsanschluss
- 11f: Arbeitsraum
- 12, 13: ABS-Steuerventile
- 14: Parkbrems-Relaisventil
- 15: Parkbremsventil
- 16: erste Bypass-Anordnung (3/2-Wegeventil)
- 16a: erster Wege-Eingang
- 16b: zweiter Wege-Eingang
- 16c: Wege-Ausgang
- 17: Bypass-Entlüftung
- 18: Drucksensor/Druckschalter
- 19: zweite Bypass-Anordnung
- 19.1: erstes 2/2-Wegeventil
- 19.2: zweites 2/2-Wegeventil
- 19a: erster Wegeanschluss
- 19b: zweiter Wegeanschluss
- 19c: dritter Wegeanschluss
- 20A: erster Druckmittelvorrat des ersten Bremskreises A
- 20B: zweiter Druckmittelvorrat des zweiten Bremskreises B
- 20C: Bypass-Druckmittelvorrat
- 21: Anhänger-Steuerventil
- 25: Drossel
- 49A: erste Energiequelle
- 49B: zweite Energiequelle
- 49C: Generator
- 49D: Kurzzeitspeicher
- 49E: Hochvoltspeicher
- 50: Steuerkolben
- 51: erster Kolben
- 52: erste Einlassöffnung
- 53: Öffnung
- 54: zweiter Kolben
- 55: dritter Kolben
- 56: vierter Kolben
- 57: zweite Einlassöffnung
- 58: Stößel
- 61: Entlüftungsraum
- 100a: elektropneumatisches Bremssystem
- 100b: rein pneumatisches Bremssystem
- 110: Betriebsbrems-Steuereinrichtung (ECU)
- 120: Assistenz-Steuereinrichtung (ADAS-ECU)
- 130: Bypass-Steuereinrichtung (Bypass-ECU)
- 200: Fahrzeug

- A, B, C: Bremskreise
- fPB: Parkbremskraft
- p1, p2, p3, p4: Betriebsbrems-Bremsdruck
- pA, pB: Betriebsbrems-Steuerdruck
- pAtm: Atmosphärendruck
- pC: Parkbrems-Steuerdruck
- pE: Fußbrems-Eingangsdruck
- pEpwm: Fußbrems-Eingangsdruck-Verlauf
- pEgl: geglätteter Fußbrems-Eingangsdruck-Verlauf
- pG: Grenzdruck
- pHigh: hohes Druckniveau
- pLow: niedriges Druckniveau
- pPB: Parkbrems-Bremsdruck
- pVA: Vorratsdruck im ersten Druckmittelvorrat 20A
- pVB: Vorratsdruck im zweiten Druckmittelvorrat 20B
- pVC: Bypass-Vorratsdruck im Bypass-Druckmittelvorrat 20C
- Q: Volumenstrom
- SA, SB: Steuersignal
- SD: Diagnose-Signal
- SF: Stotterbremsfunktion
- SU: Bypass-Signal
- t: Zeitpunkt
- t1: Puls-Zeit
- t2: Pausen-Zeit
- V1: mechanische Vorgabe
- V2: elektropneumatische Vorgabe
- VA, HA: Fahrzeugachsen
- W: Betätigungsweg
- X1: erste Steuerstellung des Steuerkolbens 50
- X2: zweite Steuerstellung des Steuerkolbens 50
- Z1, Z2: Schaltstellung
- zSoll: Fahrzeug-Soll-Verzögerung

- St1, St2, St3, St4: Schritte des Verfahrens

## Patentansprüche

1. Elektronisch steuerbares pneumatisches Bremssystem (100a, 100b) in einem Fahrzeug (200), insbesondere Nutzfahrzeug (200), mindestens aufweisend:
Radbremsen (1, 2, 3, 4) zum Abbremsen von Rädern (5, 6, 7, 8) des Fahrzeuges (200), wobei den Radbremsen (1, 2, 3, 4) von Achsmodulatoren (9, 10) in Abhängigkeit eines Betriebsbrems-Steuerdruckes (pA, pB) ein Betriebsbrems-Bremsdruck (p1, p2, p3, p4) vorgebbar ist,
ein Fußbremsventil (11) zum pneumatischen Vorgeben des Betriebsbrems-Steuerdruckes (pA, pB) an die Achsmodulatoren (9,10), wobei der Betriebsbrems-Steuerdruck (pA, pB) durch das Fußbremsventil (11) in Abhängigkeit einer mechanischen Vorgabe (V1) oder in Abhängigkeit einer elektropneumatischen Vorgabe (V2) erzeugbar ist, und
eine Bypass-Ventilanordnung (16, 19) zum Vorgeben eines als elektropneumatische Vorgabe (V2) dienenden Fußbrems-Eingangsdruckes (pE) an das Fußbremsventil (11),
wobei die Bypass-Ventilanordnung (16, 19) dem Fußbremsventil (11) in einer ersten Schaltstellung (Z1) ein niedriges Druckniveau (pLow) und in einer zweiten Schaltstellung (Z2) ein hohes Druckniveau (pHigh) als elektropneumatische Vorgabe (V2) vorgibt, so dass der Fußbrems-Eingangsdruck (pE) in Abhängigkeit des niedrigen Druckniveaus (pLow) und/oder in Abhängigkeit des hohen Druckniveaus (pHigh) vorgebbar ist,
**dadurch gekennzeichnet, dass**
die Bypass-Ventilanordnung (16, 19) mit einem Entlüftungsraum (61) des Fußbremsventils (11) strömungsverbunden ist, so dass der von der Bypass-Ventilanordnung (16, 19) vorgegebene Fußbrems-Eingangsdruck (pE) als elektropneumatische Vorgabe (V2) über den Entlüftungsraum (61) und einen Arbeitsraum (11f) des Fußbremsventils (11) direkt zu den Achsmodulatoren (9, 10) als Betriebsbrems-Steuerdruck (pA, pB) durchgeleitet werden kann.

2. Elektronisch steuerbares pneumatisches Bremssystem (100a, 100b) nach Anspruch 1,
**dadurch gekennzeichnet, dass**
die Bypass-Ventilanordnung (16, 19) das Fußbremsventil (11) in der ersten Schaltstellung (Z1) mit einer Bypass-Entlüftung (17) verbindet zum Vorgeben des niedrigen Druckniveaus (pLow) und in der zweiten Schaltstellung (Z2) mit einem Bypass-Druckmittelvorrat (20C) zum Vorgeben des hohen Druckniveaus (pHigh) zum Ausgeben einer elektropneumatischen Vorgabe (V2) in Abhängigkeit eines Atmosphärendrucks (pAtm) und/oder in Abhängigkeit eines Bypass-Vorratsdruckes (pVC).

3. Elektronisch steuerbares pneumatisches Bremssystem (100a, 100b) nach Anspruch 2,
**dadurch gekennzeichnet, dass**
die Bypass-Ventilanordnung (16, 19) den Entlüftungsraum (61) des Fußbremsventils (11) entweder mit dem Bypass-Druckmittelvorrat (20C) oder mit der Bypass-Entlüftung (17) strömungsverbindet.

4. Elektronisch steuerbares pneumatisches Bremssystem (100a, 100b) nach Anspruch 2 oder 3,
**dadurch gekennzeichnet, dass**
zwischen dem Bypass-Druckmittelvorrat (20C), der in der zweiten Schaltstellung (Z2) über die Bypass-Ventilanordnung (16, 19) mit dem Entlüftungsraum (61) strömungsverbunden ist, und der Bypass-Ventilanordnung (16) eine Drossel (25) vorgesehen ist zum Begrenzen eines zur Bypass-Ventilanordnung (16) gelangenden Volumenstroms (Q).

5. Elektronisch steuerbares pneumatisches Bremssystem (100a, 100b) nach einem der vorhergehenden Ansprüche,
**dadurch gekennzeichnet, dass**
die elektropneumatische Vorgabe (V2) eine von einer mechanischen Betätigung des Fußbremsventils (11) durch Bewegung eines Steuerkolbens (50) des Fußbremsventils (11) unabhängige Vorgabe ist, so dass der durch die Bypass-Ventilanordnung (16, 19) ausgesteuerte Fußbrems-Eingangsdruck (pE) im Wesentlichen unbeeinflusst durch das Fußbremsventil (11) strömen kann und von dem Fußbremsventil (11) als Betriebsbrems-Steuerdruck (pA, pB) an die Achsmodulatoren (9, 10) aussteuerbar ist.

6. Elektronisch steuerbares pneumatisches Bremssystem (100a, 100b) nach einem der vorhergehenden Ansprüche,
**dadurch gekennzeichnet, dass**
der Entlüftungsraum (61) in einer mechanisch betätigten Stellung des Fußbremsventils (11) bei einer Verstellung des Steuerkolbens (50) des Fußbremsventils (11) in eine erste Steuerstellung (X1) nicht über den Arbeitsraum (11f) mit den Steueranschlüssen (11a, 11b) strömungsverbunden ist, so dass der Betriebsbrems-Steuerdruck (pA, pB) in einer betätigten Stellung des Fußbremsventils (11) lediglich in Abhängigkeit der manuellen Vorgabe (V1) vorgebbar ist,
und dass der Entlüftungsraum (61) in einer mechanisch unbetätigten Stellung des Fußbremsventils (11) bei einer Verstellung des Steuerkolbens (50) des Fußbremsventils (11) in eine zweite Steuerstellung (X2) über den Arbeitsraum (11f) mit den Steueranschlüssen (11a, 11b) strömungsverbunden ist, so dass der Betriebsbrems-Steuerdruck (pA, pB) in einer mechanisch unbetätigten Stellung lediglich in Abhängigkeit der elektropneumatischen Vorgabe (V2) vorgebbar ist.

7. Elektronisch steuerbares pneumatisches Bremssystem (100a, 100b) nach einem der vorhergehenden Ansprüche,
**dadurch gekennzeichnet, dass**
die Bypass-Ventilanordnung (16, 19) über einen Entlüftungsanschluss (11e) des Fußbremsventils (11) mit dem Entlüftungsraum (61) strömungsverbunden ist.

8. Elektronisch steuerbares pneumatisches Bremssystem (100a, 100b) nach einem der vorhergehenden Ansprüche,
**dadurch gekennzeichnet, dass**
eine erste Bypass-Ventilanordnung als ein elektronisch steuerbares 3/2-Wegeventil (16) mit zwei Schaltstellungen (Z1, Z2) ausgeführt ist, wobei in der ersten Schaltstellung (Z1) des 3/2-Wegeventils (16) dem Entlüftungsraum (61) über das 3/2-Wegeventil (16) das niedrige Druckniveau (pLow) vorgebbar ist, beispielsweise von einer Bypass-Entlüftung (17), und dem Entlüftungsraum (61) in der zweiten Schaltstellung (Z2) über das 3/2-Wegeventil (16) das hohe Druckniveau (pHigh) vorgebbar ist, beispielsweise von einem Bypass-Druckmittelvorrat (20C).

9. Elektronisch steuerbares pneumatisches Bremssystem (100a, 100b) nach einem der Ansprüche 1 bis 7,
**dadurch gekennzeichnet, dass**
eine zweite Bypass-Ventilanordnung (19) zwei 2/2-Wegeventile (19.1, 19.2) aufweist, wobei durch ein erstes 2/2-Wegeventil (19.1) das niedriges Druckniveau (pLow) an den Entlüftungsraum (61) vorgebbar ist, beispielsweise von einer Bypass-Entlüftung (17) und durch ein zweites 2/2-Wegeventil (19.2) das hohe Druckniveau (pHigh), beispielsweise von einem Bypass-Druckmittelvorrat (20C), wobei dem Entlüftungsraum (61) in der ersten Schaltstellung (Z1) der zweiten Bypass-Ventilanordnung (19) durch das erste 2/2-Wegeventil (19.1) das niedrige Druckniveau (pLow) vorgebbar ist und durch das zweite 2/2-Wegeventil (19.2) gleichzeitig eine Vorgabe des hohen Druckniveaus (pHigh) an den Entlüftungsraum (61) verhinderbar ist,
und in der zweiten Schaltstellung (Z2) der zweiten Bypass-Ventilanordnung (19) eine Vorgabe des niedrigen Druckniveaus (pLow) durch das erste 2/2-Wegeventil (19.1) verhinderbar ist und dem Entlüftungsraum (61) gleichzeitig durch das zweite 2/2-Wegeventil (19.2) das hohe Druckniveau (pHigh) vorgebbar ist.

10. Elektronisch steuerbares pneumatisches Bremssystem (100a, 100b) nach einem der vorhergehenden Ansprüche,
**dadurch gekennzeichnet, dass**
die Bypass-Ventilanordnung (16) monostabil ist und die erste Schaltstellung (Z1) eine stabile Schaltstellung darstellt, in die die Bypass-Ventilanordnung (16) ohne Ansteuerung automatisch zurückfällt.

11. Elektronisch steuerbares pneumatisches Bremssystem (100a, 100b) nach einem der vorhergehenden Ansprüche,
**dadurch gekennzeichnet, dass**
die Bypass-Ventilanordnung (16, 19) über ein von einer Bypass-Steuereinrichtung (130) vorgegebenes Bypass-Signal (SU) elektrisch ansteuerbar ist.

12. Elektronisch steuerbares pneumatisches Bremssystem (100a, 100b) nach Anspruch 11,
**dadurch gekennzeichnet, dass**
von der Bypass-Steuereinrichtung (130) ein pulsweitenmoduliertes Bypass-Signal (SU) ausgebbar ist zum abwechselnden Umschalten zwischen der ersten Schaltstellung (Z1) und der zweiten Schaltstellung (Z2) zum Ausbilden einer Stotterbremsfunktion (SF) durch Variieren des Fußbrems-Eingangsdruckes (pE).

13. Elektronisch steuerbares pneumatisches Bremssystem (100a, 100b) nach Anspruch 12,
**dadurch gekennzeichnet, dass**
die Bypass-Ventilanordnung (16, 19) abwechselnd für eine Puls-Zeit (t1) in die zweite Schaltstellung (Z2) und für eine Pausen-Zeit (t2) in die erste Schaltstellung (Z1) schaltbar ist zum abwechselnden Umschalten des Bypass-Ventils (16), wobei die Puls-Zeit (t1) zwischen 5ms und 1000ms liegt und die Pausen-Zeit (t2) zwischen 0ms und 2000ms.

14. Verfahren zum elektronischen Steuern eines pneumatischen Bremssystems (100a, 100b) nach einem der vorhergehenden Ansprüche, mit mindestens den folgenden Schritten:
- Feststellen, ob ein Ausfall oder ein Defekt bei der elektronischen Ansteuerung (SA, SB) der Achsmodulatoren (9, 10) vorliegt (St1);
- Ansteuern der Bypass-Ventilanordnung (16, 19) über das Bypass-Signal (SU), falls ein Ausfall oder ein Defekt festgestellt wurde und eine Nicht-Betätigung des Fußbremsventils (11) vorliegt zum Ausbilden einer Redundanz durch Ausgeben einer elektropneumatischen Vorgabe (V2) (St2);
- Ausgeben des Fußbrems-Eingangsdruckes (pE) als elektropneumatische Vorgabe (V2) von der Bypass-Ventilanordnung (16, 19) in den Entlüftungsraum (61) und/oder an den Fußbrems-Entlüftungsanschluss (11e) des Fußbremsventils (11) (St3);
- direktes Weiterleiten des Fußbrems-Eingangsdruckes (pE) als Betriebsbrems-Steuerdruck (pA, pB) an die Achsmodulatoren zum redundanten elektropneumatischen Betätigen der Radbremsen (1, 2, 3, 4) (St4).

15. Verfahren nach Anspruch 14,
**dadurch gekennzeichnet, dass**
die Bypass-Ventilanordnung (16, 19) über ein von der Bypass-Steuereinrichtung (130) vorgegebenes Bypass-Signal (SU) elektrisch angesteuert wird,
wobei die Bypass-Ventilanordnung (16, 19) ohne eine Ansteuerung über das Bypass-Signal (SU) in die erste Schaltstellung (Z1) und bei einer Ansteuerung über das Bypass-Signal (SU) in die zweite Schaltstellung (Z2) übergeht.

16. Verfahren nach Anspruch 15,
**dadurch gekennzeichnet, dass**
die Bypass-Steuereinrichtung (130) das Bypass-Signal (SU) pulsweitenmoduliert vorgibt,
wobei die Bypass-Ventilanordnung (16, 19) dadurch zwischen der ersten Schaltstellung (Z1) und der zweiten Schaltstellung (Z2) abwechselnd hin und her geschaltet wird,
wobei die Bypass-Ventilanordnung (16, 19) dazu für die Puls-Zeit (t1) in die zweite Schaltstellung (Z2) und für die Pausen-Zeit (t2) in die erste Schaltstellung (Z1) gebracht wird, so dass der Betriebsbrems-Bremsdruck (p1, p2, p3, p4) variiert zum Ausbilden der Stotterbremsfunktion (SF).

17. Verfahren nach einem der Ansprüche 14 bis 16,
**dadurch gekennzeichnet, dass**
die Bypass-Ventilanordnung (16, 19) lediglich dann angesteuert wird, wenn keine Betätigung des Fußbremsventils (11) durch den Fahrer vorliegt.

18. Verfahren nach einem der Ansprüche 14 bis 17,
**dadurch gekennzeichnet, dass**
von der Bypass-Ventilanordnung (16, 19) in der ersten Schaltstellung (Z1) ein niedriges Druckniveau (pLow), beispielsweise den Atmosphärendruck (pAtm), und in der zweiten Schaltstellung ein hohes Druckniveau (pHigh), beispielsweise der Bypass-Vorratsdruck (pVC), ausgesteuert wird.

19. Fahrzeug (200), insbesondere Nutzfahrzeug (200), mit einem elektronisch gesteuerten pneumatischen Bremssystem (100a, 100b) nach einem der Ansprüche 1 bis 13, insbesondere geeignet zur Durchführung eines Verfahrens nach einem der Ansprüche 14 bis 18.

## Claims

1. Electronically controllable pneumatic brake system (100a, 100b) in a vehicle (200), in particular a commercial vehicle (200), comprising at least:
wheel brakes (1, 2, 3, 4) for braking wheels (5, 6, 7, 8) of the vehicle (200), wherein a service brake braking pressure (p1, p2, p3, p4) may be specified by axle modulators (9, 10) to the wheel brakes (1, 2, 3, 4) in dependence upon a service brake control pressure (pA, pB),
a foot brake valve (11) for the pneumatic specification of the service brake control pressure (pA, pB) to the axle modulators (9, 10), wherein the service brake control pressure (pA, pB) may be generated by means of the foot brake valve (11) in dependence upon a mechanical specification (V1) or in dependence upon an electropneumatic specification (V2), and
a bypass valve arrangement (16, 19) for specifying a foot brake input pressure (pE) to the foot brake valve (11), said foot brake input pressure (pE) being used as an electropneumatic specification (V2),
wherein the bypass valve arrangement (16, 19) specifies a low pressure level (pLow) to the foot brake valve (11) in a first switch position (Z1) and said bypass valve arrangement (16, 19) specifies a high pressure level (pHigh) to the foot brake valve (11) in a second switch position (Z2) as an electropneumatic specification (V2) with the result that the foot brake input pressure (pE) may be specified in dependence upon the low pressure level (pLow) and/or in dependence upon the high pressure level (pHigh),
**characterized in that**
the bypass valve arrangement (16, 19) is connected to a venting chamber (61) of the foot brake valve (11) so as to conduct flow with the result that the foot brake input pressure (pE) that is specified by the bypass valve arrangement (16, 19) may be passed through as an electropneumatic specification (V2) via the venting chamber (61) and an operating chamber (11f) of the foot brake valve (11) directly to the axle modulators (9, 10) as a service brake control pressure (pA, pB).

2. Electronically controllable pneumatic brake system (100a, 100b) according to Claim 1, **characterized in that** in the first switch position (Z1) the bypass valve arrangement (16, 19) connects the foot brake valve (11) to a bypass venting facility (17) so as to specify the low pressure level (pLow) and in the second switch position (Z2) the bypass valve arrangement (16, 19) connects the foot brake valve (11) to a bypass pressure medium reservoir (20C) so as to specify the high pressure level (pHigh) so as to output an electropneumatic specification (V2) in dependence upon an atmospheric pressure (pAtm) and/or in dependence upon a bypass reservoir pressure (pVC).

3. Electronically controllable pneumatic brake system (100a, 100b) according to Claim 2, **characterized in that** the bypass valve arrangement (16, 19) connects the venting chamber (61) of the foot brake valve (11) either to the bypass pressure medium reservoir (20C) or to the bypass venting facility (17) so as to conduct flow.

4. Electronically controllable pneumatic brake system (100a, 100b) according to Claim 2 or 3, **characterized in that** a throttle (25) is provided between the bypass pressure medium reservoir (20C), which in the second switch position (Z2) is connected so as to conduct flow via the bypass valve arrangement (16, 19) to the venting chamber (61), and the bypass valve arrangement (16) so as to limit a volume flow (Q) passing to the bypass valve arrangement (16).

5. Electronically controllable pneumatic brake system (100a, 100b) according to any one of the preceding claims, **characterized in that** the electropneumatic specification (V2) is a specification that is independent of a mechanical actuation of the foot brake valve (11) by means of moving a control piston (50) of the foot brake valve (11),
with the result that the foot brake input pressure (pE) that is output by means of the bypass valve arrangement (16, 19) may flow essentially uninfluenced through the foot brake valve (11) and may be output by the foot brake valve (11) as a service brake control pressure (pA, pB) to the axle modulators (9, 10).

6. Electronically controllable pneumatic brake system (100a, 100b) according to any one of the preceding claims, **characterized in that** the venting chamber (61) is not connected via the operating chamber (11f) to the control connections (11a, 11b) so as to conduct flow in a mechanically actuated position of the foot brake valve (11) during an adjustment of the control piston (50) of the foot brake valve (11) into a first control position (X1) with the result that the service brake control pressure (pA, pB) may only be specified in an actuated position of the foot brake valve (11) in dependence upon the manual specification (V1), and
**in that** the venting chamber (61) is connected via the operating chamber (11f) to the control connections (11a, 11b) so as to conduct flow in a mechanically non-actuated position of the foot brake valve (11) during an adjustment of the control piston (50) of the foot brake valve (11) into a second control position (X2) with the result that the service brake control pressure (pA, pB) may only be specified in a mechanically non-actuated position in dependence upon the electropneumatic specification (V2).

7. Electronically controllable pneumatic brake system (100a, 100b) according to any one of the preceding claims, **characterized in that** the bypass valve arrangement (16, 19) is connected via a venting connection (11e) of the foot brake valve (11) to the venting chamber (61) so as to conduct flow.

8. Electronically controllable pneumatic brake system (100a, 100b) according to any one of the preceding claims, **characterized in that** a first bypass valve arrangement is embodied as an electronically controllable 3/2 directional control valve (16) having two switch positions (Z1, Z2), wherein the low pressure level (pLow) may be specified to the venting chamber (61) in the first switch position (Z1) of the 3/2 directional control valve (16) via the 3/2 directional control valve (16), by way of example by a bypass venting facility (17), and the high pressure level (pHigh) may be specified to the venting chamber (61) in the second switch position (Z2) via the 3/2 directional control valve (16), by way of example by a bypass pressure medium reservoir (20C).

9. Electronically controllable pneumatic brake system (100a, 100b) according to any one of Claims 1 to 7, **characterized in that** a second bypass valve arrangement (19) comprises two 2/2 directional control valves (19.1, 19.2),
wherein the low pressure level (pLow) may be specified to the venting chamber (61) by means of a first 2/2 directional control valve (19.1), by way of example by a bypass venting facility (17) and the high pressure level (pHigh) may be specified by means of a second 2/2 directional control valve (19.2), by way of example by a bypass pressure medium reservoir (20C),
wherein the low pressure level (pLow) may be specified to the venting chamber (61) in the first switch position (Z1) of the second bypass valve arrangement (19) by means of the first 2/2 directional control valve (19.1) and simultaneously a specification of the high pressure level (pHigh) to the venting chamber (61) may be prevented by means of the second 2/2 directional control valve (19.2),
and a specification of the low pressure level (pLow) may be prevented in the second switch position (Z2) of the second bypass valve arrangement (19) by means of the first 2/2 directional control valve (19.1) and simultaneously the high pressure level (pHigh) may be specified to the venting chamber (61) by means of the second 2/2 directional control valve (19.2).

10. Electronically controllable pneumatic brake system (100a, 100b) according to any one of the preceding claims, **characterized in that** the bypass valve arrangement (16) is monostable and the first switch position (Z1) represents a stable switch position, into which the bypass valve arrangement (16) automatically falls back if an actuation is not performed.

11. Electronically controllable pneumatic brake system (100a, 100b) according to any one of the preceding claims, **characterized in that** the bypass valve arrangement (16, 19) may be electrically actuated via a bypass signal (SU) that is specified by a bypass control unit (130).

12. Electronically controllable pneumatic brake system (100a, 100b) according to Claim 11, **characterized in that** a pulse-width modulated bypass signal (SU) may be output by the bypass control unit (130) so as to alternately switch between the first switch position (Z1) and the second switch position (Z2) so as to embody an intermittent braking function (SF) by means of varying the foot brake input pressure (pE).

13. Electronically controllable pneumatic brake system (100a, 100b) according to Claim 12, **characterized in that** the bypass valve arrangement (16, 19) may be alternately switched for a pulse time (t1) into the second switch position (Z2) and for a pause time (t2) into the first switch position (Z1) so as to alternately switch the bypass valve (16), wherein the pulse time (t1) is between 5ms and 1000ms and the pause time (t2) is between 0ms and 2000ms.

14. Method for electronically controlling a pneumatic brake system (100a, 100b) according to any one of the preceding claims, having at least the following steps:
- determining whether a failure or a defect has occurred in the electronic actuation (SA, SB) of the axle modulators (9, 10) (St1);
- actuating the bypass valve arrangement (16, 19) via the bypass signal (SU) in the event of a failure or a defect being determined and the foot brake valve (11) not being actuated so as to embody a redundancy by means of outputting an electropneumatic specification (V2) (St2);
- outputting the foot brake input pressure (pE) as an electropneumatic specification (V2) by the bypass valve arrangement (16, 19) into the venting chamber (61) and/or to the foot brake venting connection (11e) of the foot brake valve (11) (St3);
- directly relaying the foot brake input pressure (pE) as the service brake control pressure (pA, pB) to the axle modulators for the redundant electropneumatic actuation of the wheel brakes (1, 2, 3, 4) (St4).

15. Method according to Claim 14, **characterized in that** the bypass valve arrangement (16, 19) is electrically actuated via a bypass signal (SU) that is specified by the bypass control unit (130), wherein the bypass valve arrangement (16, 19) transfers into the first switch position (Z1) if an actuation is not performed via the bypass signal (SU) and said bypass valve arrangement (16, 19) transfers into the second switch position (Z2) if an actuation is performed via the bypass signal (SU) .

16. Method according to Claim 15, **characterized in that** the bypass control unit (130) specifies the bypass signal (SU) in a pulse-width modulated manner, wherein the bypass valve arrangement (16, 19) is consequently alternately switched back and forth between the first switch position (Z1) and the second switch position (Z2),
wherein the bypass valve arrangement (16, 19) is brought for this purpose into the second switch position (Z2) for the pulse time (t1) and into the first switch position (Z1) for the pause time (t2) with the result that the service brake braking pressure (p1, p2, p3, p4) varies so as to embody the intermittent braking function (SF).

17. Method according to any one of Claims 14 to 16, **characterized in that** the bypass valve arrangement (16, 19) is only actuated if the driver does not actuate the foot brake valve (11).

18. Method according to any one of Claims 14 to 17, **characterized in that** a low pressure level (pLow) is output by the bypass valve arrangement (16, 19) in the first switch position (Z1), by way of example the atmospheric pressure (pAtm), and a high pressure level (pHigh) is output in the second switch position, by way of example the bypass reservoir pressure (pVC).

19. Vehicle (200), in particular a commercial vehicle (200), having an electronically controlled pneumatic brake system (100a, 100b) according to any one of Claims 1 to 13, in particular suitable for implementing a method according to any one of Claims 14 to 18.

## Revendications

1. Système de freinage (100a, 100b) pneumatique commandable électroniquement dans un véhicule (200), notamment un véhicule utilitaire (200), comprenant au moins :
des freins de roue (1, 2, 3, 4) destinés à freiner des roues (5, 6, 7, 8) du véhicule (200), une pression de freinage de frein de service (p1, p2, p3, p4) pouvant être prescrite aux freins de roue (1, 2, 3, 4) par des modulateurs d'essieu (9, 10) en fonction d'une pression pilote de frein de service (pA, pB), une vanne de frein au pied (11) destinée à prescrire pneumatiquement la pression pilote de frein de service (pA, pB) aux modulateurs d'essieu (9, 10), la pression pilote de frein de service (pA, pB) pouvant être générée par la vanne de frein au pied (11) en fonction d'une consigne mécanique (V1) ou en fonction d'une consigne électropneumatique (V2), et un arrangement de vanne de dérivation (16, 19) destiné à prescrire à la vanne de frein au pied (11) une pression d'entrée de frein au pied (pE) servant de consigne électropneumatique (V2),
l'arrangement de vanne de dérivation (16, 19) prescrivant à la vanne de frein au pied (11), en tant que consigne électropneumatique (V2), un niveau de pression bas (pLow) dans une première position de commutation (Z1) et un niveau de pression haut (pHigh) dans une deuxième position de commutation (Z2), de sorte que la pression d'entrée de frein au pied (pE) puisse être prescrite en fonction du niveau de pression bas (pLow) et/ou en fonction du niveau de pression haut (pHigh),
**caractérisé en ce que**
l'arrangement de vanne de dérivation (16, 19) est relié fluidiquement à un espace de purge d'air (61) de la vanne de frein au pied (11), de sorte que la pression d'entrée de frein au pied (pE) prescrite par l'arrangement de vanne de dérivation (16, 19) en tant que consigne électropneumatique (V2) peut être transférée directement aux modulateurs d'essieu (9, 10) en tant que pression pilote de frein de service (pA, pB) par le biais de l'espace de purge d'air (61) et d'un espace de travail (11f) de la vanne de frein au pied (11) .

2. Système de freinage (100a, 100b) pneumatique commandable électroniquement selon la revendication 1, **caractérisé en ce que** l'arrangement de vanne de dérivation (16, 19), dans la première position de commutation (Z1), relie la vanne de frein au pied (11) à une purge d'air de dérivation (17) en vue de prescrire le niveau de pression bas (pLow) et, dans la deuxième position de commutation (Z2), à une réserve de fluide sous pression de dérivation (20C) en vue de prescrire le niveau de pression haut (pHigh) afin de délivrer une consigne électropneumatique (V2) en fonction d'une pression atmosphérique (pAtm) et/ou en fonction d'une pression de réserve de dérivation (pVC).

3. Système de freinage (100a, 100b) pneumatique commandable électroniquement selon la revendication 2, **caractérisé en ce que** l'arrangement de vanne de dérivation (16, 19) relie fluidiquement l'espace de purge d'air (61) de la vanne de frein au pied (11) soit à la réserve de fluide sous pression de dérivation (20C), soit à la purge d'air de dérivation (17).

4. Système de freinage (100a, 100b) pneumatique commandable électroniquement selon la revendication 2 ou 3, **caractérisé en ce qu'**un étrangleur (25) destiné à limiter le débit volumique (Q) qui parvient à l'arrangement de vanne de dérivation (16) se trouve entre la réserve de fluide sous pression de dérivation (20C), qui est reliée fluidiquement à l'espace de purge d'air (61) dans la deuxième position de commutation (Z2) de l'arrangement de vanne de dérivation (16, 19), et l'arrangement de vanne de dérivation (16).

5. Système de freinage (100a, 100b) pneumatique commandable électroniquement selon l'une des revendications précédentes, **caractérisé en ce que** la consigne électropneumatique (V2) est une consigne indépendante d'un actionnement mécanique de la vanne de frein au pied (11) par un mouvement d'un piston de commande (50) de la vanne de frein au pied (11), de sorte que la pression d'entrée de frein au pied (pE) pilotée par l'arrangement de vanne de dérivation (16, 19) peut s'écouler à travers la vanne de frein au pied (11) sensiblement sans être influencée et peut être transmise par la vanne de frein au pied (11) aux modulateurs d'essieu (9, 10) en tant que pression pilote de frein de service (pA, pB).

6. Système de freinage (100a, 100b) pneumatique commandable électroniquement selon l'une des revendications précédentes, **caractérisé en ce que** l'espace de purge d'air (61), dans une position actionnée mécaniquement de la vanne de frein au pied (11), n'est pas relié fluidiquement aux raccords de commande (11a, 11b) par le biais de l'espace de travail (11f) lors d'un positionnement du piston de commande (50) de la vanne de frein au pied (11) dans une première position de commande (X1), de sorte que la pression pilote de frein de service (pA, pB), dans une position actionnée de la vanne de frein au pied (11), peut uniquement être prescrite en fonction de la consigne manuelle (V1), et
**en ce que** l'espace de purge d'air (61), dans une position non actionnée mécaniquement de la vanne de frein au pied (11), est relié fluidiquement aux raccords de commande (11a, 11b) par le biais de l'espace de travail (11f) lors d'un positionnement du piston de commande (50) de la vanne de frein au pied (11) dans une deuxième position de commande (X2), de sorte que la pression pilote de frein de service (pA, pB), dans une position non actionnée mécaniquement, peut uniquement être prescrite en fonction de la consigne électropneumatique (V2).

7. Système de freinage (100a, 100b) pneumatique commandable électroniquement selon l'une des revendications précédentes, **caractérisé en ce que** l'arrangement de vanne de dérivation (16, 19) est relié fluidiquement à l'espace de purge d'air (61) par le biais d'un raccord de purge d'air (11e) de la vanne de frein au pied (11).

8. Système de freinage (100a, 100b) pneumatique commandable électroniquement selon l'une des revendications précédentes, **caractérisé en ce qu'**un premier arrangement de vanne de dérivation est réalisé sous la forme d'un distributeur 3/2 (16) avec deux positions de commutation (Z1, Z2), le niveau de pression bas (pLow) pouvant être prescrit à l'espace de purge d'air (61) par le biais du distributeur 3/2 (16) dans la première position de commutation (Z1) du distributeur 3/2 (16), par exemple depuis une purge d'air de dérivation (17), le niveau de pression haut (pHigh) pouvant être prescrit à l'espace de purge d'air (61) par le biais du distributeur 3/2 (16) dans la deuxième position de commutation (Z2), par exemple depuis une réserve de fluide sous pression de dérivation (20C).

9. Système de freinage (100a, 100b) pneumatique commandable électroniquement selon l'une des revendications 1 à 7, **caractérisé en ce qu'**un deuxième arrangement de vanne de dérivation (19) est réalisé sous la forme de deux distributeurs 2/2 (19.1, 19.2), le niveau de pression bas (pLow) pouvant être prescrit à l'espace de purge d'air (61) par le biais d'un premier distributeur 2/2 (19.1), par exemple depuis une purge d'air de dérivation (17), le niveau de pression haut (pHigh) par le biais d'un deuxième distributeur 2/2 (19.2), par exemple depuis une réserve de fluide sous pression de dérivation (20C),
dans la première position de commutation (Z1) du deuxième arrangement de vanne de dérivation (19), le niveau de pression bas (pLow) pouvant être prescrit à l'espace de purge d'air (61) par le biais d'un premier distributeur 2/2 (19.1) et une consigne du niveau de pression haut (pHigh) à l'espace de purge d'air (61) par le biais du deuxième distributeur 2/2 (19.2) pouvant simultanément être empêchée,
dans la deuxième position de commutation (Z2) du deuxième arrangement de vanne de dérivation (19), une consigne du niveau de pression bas (pLow) par le biais d'un premier distributeur 2/2 (19.1) pouvant être empêchée et le niveau de pression haut (pHigh) pouvant simultanément être prescrit à l'espace de purge d'air (61) par le biais du deuxième distributeur 2/2 (19.2).

10. Système de freinage (100a, 100b) pneumatique commandable électroniquement selon l'une des revendications précédentes, **caractérisé en ce que** l'arrangement de vanne de dérivation (16) est monostable et la première position de commutation (Z1) représente une position de commutation stable dans laquelle l'arrangement de vanne de dérivation (16) revient automatiquement sans pilotage.

11. Système de freinage (100a, 100b) pneumatique commandable électroniquement selon l'une des revendications précédentes, **caractérisé en ce que** l'arrangement de vanne de dérivation (16, 19) peut être piloté électriquement par le biais d'un signal de dérivation (SU) prédéfini par un dispositif de commande de dérivation (130).

12. Système de freinage (100a, 100b) pneumatique commandable électroniquement selon la revendication 11, **caractérisé en ce qu'**un signal de dérivation (SU) modulé en largeur d'impulsion peut être délivré par le dispositif de commande de dérivation (130) pour une permutation en alternance entre la première position de commutation (Z1) et la deuxième position de commutation (Z2) en vue de former une fonction de frein par pompage (SF) en faisant varier la pression d'entrée de frein au pied (pE).

13. Système de freinage (100a, 100b) pneumatique commandable électroniquement selon la revendication 12, **caractérisé en ce que** l'arrangement de vanne de dérivation (16, 19) peut être commuté en alternance dans la deuxième position de commutation (Z2) pendant une durée d'impulsion (t1) et dans la première position de commutation (Z1) pendant une durée de pause (t2) en vue de la permutation en alternance de la vanne de dérivation (16), la durée d'impulsion (t1) étant comprise entre 5 ms et 1000 ms et la durée de pause (t2) étant comprise entre 0 ms et 2000 ms.

14. Procédé de commande électronique d'un système de freinage (100a, 100b) pneumatique selon l'une des revendications précédentes, comprenant au moins les étapes suivantes :
- constatation si une panne ou un défaut est présent(e) au niveau du pilotage électronique (SA, SB) des modulateurs d'essieu (9, 10) (St1) ;
- pilotage de l'arrangement de vanne de dérivation (16, 19) par le biais du signal de dérivation (SU) dans le cas où une panne ou un défaut a été constaté (e) et dans le cas où il y a une non-activation de la vanne de frein au pied (11) en vue de former une redondance par délivrance d'une consigne électropneumatique (V2) (St2) ;
- délivrance de la pression d'entrée de frein au pied (pE) en tant que consigne électropneumatique (V2) par l'arrangement de vanne de dérivation (16, 19) dans l'espace de purge d'air (61) et/ou au raccord de purge d'air (11e) de la vanne de frein au pied (11) (St3) ;
- retransmission directe de la pression d'entrée de frein au pied (pE) en tant que pression pilote de frein de service (pA, pB) aux modulateurs d'essieu en vue de l'actionnement électropneumatique redondant des freins de roue (1, 2, 3, 4) (St4).

15. Procédé selon la revendication 14, **caractérisé en ce que** l'arrangement de vanne de dérivation (16, 19) est piloté électriquement par le biais d'un signal de dérivation (SU) prédéfini par un dispositif de commande de dérivation (130), l'arrangement de vanne de dérivation (16, 19), en l'absence d'un pilotage par le signal de dérivation (SU), passant dans la première position de commutation (Z1) et dans la deuxième position de commutation (Z2) dans le cas d'un pilotage par le signal de dérivation (SU).

16. Procédé selon la revendication 15, **caractérisé en ce que** le dispositif de commande de dérivation (130) prescrit le signal de dérivation (SU) modulé en largeur d'impulsion, l'arrangement de vanne de dérivation (16, 19) étant par ce fait commuté en alternance selon un mouvement de va-et-vient entre la première position de commutation (Z1) et la deuxième position de commutation (Z2),
l'arrangement de vanne de dérivation (16, 19) étant à cet effet amené dans la deuxième position de commutation (Z2) pendant la durée d'impulsion (t1) et dans la première position de commutation (Z1) pendant la durée de pause (t2), de sorte que la pression de freinage de frein de service (p1, p2, p3, p4) soit variée afin de former la fonction de frein par pompage (SF) .

17. Procédé selon l'une des revendications 14 à 16, **caractérisé en ce que** l'arrangement de vanne de dérivation (16, 19) est seulement piloté en l'absence d'actionnement de la vanne de frein au pied (11) par le conducteur.

18. Procédé selon l'une des revendications 14 à 17, **caractérisé en ce qu'**un niveau de pression bas (pLow), par exemple la pression atmosphérique (pAtm), est commandé en sortie par l'arrangement de vanne de dérivation (16, 19) dans la première position de commutation (Z1), et un niveau de pression haut (pHigh), par exemple la pression de réserve de dérivation (pVC), est commandé en sortie dans la deuxième position de commutation.

19. Véhicule (200), notamment véhicule utilitaire (200), comprenant un système de freinage (100a, 100b) pneumatique commandé électroniquement selon l'une des revendications 1 à 13, notamment adapté pour mettre en œuvre un procédé selon l'une des revendications 14 à 18.
